(19) Europäisches Patentamt
European Patent Office
Office européen des brevets

(11) **EP 4 692 670 A1**

(12) **EUROPEAN PATENT APPLICATION**
published in accordance with Art. 153(4) EPC

(43) Date of publication:
**11.02.2026 Bulletin 2026/07**

(21) Application number: **24818213.1**

(22) Date of filing: **08.01.2024**

(51) International Patent Classification (IPC):
*F24H 1/54* (2022.01)      *F24H 15/212* (2022.01)
*F24H 15/269* (2022.01)     *F24H 15/37* (2022.01)
*F24H 15/414* (2022.01)     *G06F 17/18* (2006.01)

(52) Cooperative Patent Classification (CPC):
**G05D 23/1951; F24H 1/54; F24H 9/2007;
F24H 15/212; F24H 15/269; F24H 15/355;
Y02B 30/00**

(86) International application number:
**PCT/CN2024/071153**

(87) International publication number:
**WO 2024/250674 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.06.2023 CN 202310662858**

(71) Applicants:
• **GD Midea Heating & Ventilating Equipment Co.,
Ltd.**
**Foshan, Guangdong 528311 (CN)**
• **Midea Group Co., Ltd.**
**Foshan, Guangdong 528311 (CN)**

(72) Inventors:
• **YUE, Bao**
**Foshan, Guangdong 528311 (CN)**
• **HE, Zhihui**
**Foshan, Guangdong 528311 (CN)**
• **HUANG, Liangwei**
**Foshan, Guangdong 528311 (CN)**

(74) Representative: **Ran, Handong**
**Maucher Jenkins
Seventh Floor Offices
Artillery House
11-19 Artillery Row
London SW1P 1RT (GB)**

(54) **HEATING TIME CALCULATION METHOD AND APPARATUS, AND STORAGE MEDIUM AND ELECTRONIC DEVICE**

(57)    A heating time calculation method and apparatus, and a storage medium and an electronic device. The method comprises: acquiring ambient temperatures respectively corresponding to a plurality of sub-time periods in a preset time period; according to the ambient temperatures respectively corresponding to the plurality of sub-time periods, determining heat amount differences between sub-amounts of heat output by a heating device and sub-amounts of heat dissipated by a target object, which heat amount differences respectively correspond to the plurality of sub-time periods; and according to the heat amount differences respectively corresponding to the plurality of sub-time periods, acquiring the number of sub-time periods required for accumulating a plurality of heat amount differences to obtain the total amount of heat, wherein the total amount of heat is the amount of heat required for heating the target object from an initial temperature to a set temperature.

FIG. 2

**Description**

**CROSS-REFERENCE TO RELATED APPLICATION**

This application claims priority to Chinese Patent Application No. 202310662858.3, titled "HEATING TIME CALCULATION METHOD AND APPARATUS, AND STORAGE MEDIUM AND ELECTRONIC DEVICE", and filed on July 05, 2023, the entire disclosure of which is incorporated herein by reference.

**FIELD**

The invention relates to the field of temperature control, and more particularly, to a heating time calculation method and apparatus, a storage medium, and an electronic device.

**BACKGROUND**

A variable-frequency heating device refers to a device that automatically adjusts operating power based on actual conditions, enabling a constant temperature of a heated object. A general non-variable-frequency heating device is a device that automatically adjusts heating time and maintains a temperature by setting different temperatures. The variable-frequency heating device can not only deliver superior heating performance but also reduce power consumption and loss due to its operating principle of changing a power supply frequency to adjust a load, thus exhibiting a more prolonged service life than the non-variable-frequency heating device.

However, due to a variable operating frequency of the variable-frequency heating device, it is difficult to calculate time required to heat an object to a set temperature when using the variable-frequency heating device for heating. For example, when using the variable-frequency heating device to heat swimming pool water, if there is no function to provide heating time required for a swimming pool to a user, the user cannot know the heating time required for the swimming pool during use of the variable-frequency heating device, and thus fails to appropriately choose when to turn on the variable-frequency heating device. When the user turns on the variable-frequency heating device too early, a temperature of the swimming pool water reaches the set temperature prematurely before use of the swimming pool. Subsequently, the variable-frequency heating device needs to continuously maintain the swimming pool water at the set temperature, resulting in high energy consumption and waste. When the user turns on the variable-frequency heating device too late, a temperature of the swimming pool water fails to reach the set temperature within expected usage time, leading to poor user experience.

**SUMMARY**

Embodiments of the invention provide a heating time calculation method and apparatus, a storage medium, and an electronic device, capable of improving accuracy of calculating time required for a variable-frequency heating device to heat an object to a set temperature. Technical solutions are as follows.

In a first aspect, embodiments of the invention provide a heating time calculation method. The method includes: obtaining an ambient temperature corresponding to each of a plurality of sub-time periods within a predetermined time period; determining, based on the ambient temperature corresponding to each of the plurality of sub-time periods, a heat difference between sub-heat outputted by a heating device and sub-heat dissipated by a target object corresponding to each of the plurality of sub-time periods; and obtaining, based on the heat difference corresponding to each of the plurality of sub-time periods, the number of the sub-time periods having corresponding heat differences that sum up to total heat, the total heat being heat required to heat the target object from an initial temperature to a set temperature.

In a second aspect, embodiments of the invention provide a heating time calculation apparatus. The apparatus includes an ambient temperature module, a heat difference module, and a time determination module. The ambient temperature module is configured to obtain an ambient temperature corresponding to each of a plurality of sub-time periods within a predetermined time period. The heat difference module is configured to determine, based on the ambient temperature corresponding to each of the plurality of sub-time periods, heat difference between sub-heat outputted by a heating device and sub-heat dissipated by a target object corresponding to each of the plurality of sub-time period. The time determination module is configured to obtain, based on the heat difference corresponding to each of the plurality of sub-time periods, the number of the sub-time periods having corresponding heat differences that sum up to total heat. The total heat is heat required to heat the target object from an initial temperature to a set temperature.

In a third aspect, embodiments of the invention provide a computer storage medium. The computer storage medium has a plurality of instructions stored thereon. The plurality of instructions are adapted to be loaded by a processor and perform steps of the method described above.

In a fourth aspect, embodiments of the invention provide an electronic device. The electronic device includes a processor and a memory. The memory has a computer program stored thereon. The computer program is adapted to be loaded by the processor and perform steps of the method described above.

The technical solutions according to some embodiments of the invention at least include the following beneficial effects.

In the embodiments of the invention, the heat difference between the sub-heat outputted by the heating device and the sub-heat dissipated by the target object in the sub-time period is determined based on the ambient temperature corresponding to each of the plurality of time periods, and the number of the sub-time periods having corresponding heat differences that sum up to the total heat is obtained by determining the heat required to heat the target object from the initial temperature to the set temperature. Therefore, the time required to heat the target object from the initial temperature to the set temperature is determined based on the number of required sub-time periods and a duration of the sub-time periods. That is, since an operating frequency of the variable-frequency heating device is not constant and changes under the influence of the ambient temperature and the object temperature of the target object, an impact of the heat difference in the sub-time period on sub-heat outputted by the heating device and sub-heat dissipated by the target object in a next sub-time period are fully considered in the embodiments of the invention by calculating the heat difference between the sub-heat outputted by the heating device and the sub-heat dissipated by the target object in the sub-time period. Thus, the accuracy of calculating the time required for the variable-frequency heating device to heat the object to the set temperature is improved. In this way, user experience is greatly enhanced.

**BRIEF DESCRIPTION OF THE DRAWINGS**

In order to clearly explain technical solutions of embodiments of the invention, drawings used in description of the embodiments or the related art will be briefly described below. The drawings described below merely illustrate some embodiments of the invention. Based on these drawings, other drawings can be obtained by those skilled in the art without creative effort.

FIG. 1 is a schematic diagram of a scene in which a target object is heated by a heating device according to an embodiment of the invention.

FIG. 2 is a schematic flowchart of a heating time calculation method according to an embodiment of the invention.

FIG. 3 is a schematic coordinate diagram of time and ambient temperature according to an embodiment of the invention.

FIG. 4 is a schematic flowchart of another heating time calculation method according to an embodiment of the invention.

FIG. 5 is a schematic flowchart of correcting an ambient temperature according to an embodiment of the invention.

FIG. 6 is a schematic flowchart of determining output power of a heating device according to an embodiment of the invention.

FIG. 7 is a schematic flowchart of a heating time calculation method according to an embodiment of the invention.

FIG. 8 is a schematic flowchart of yet another heating time calculation method according to an embodiment of the invention.

FIG. 9 is a schematic structural diagram of a heating time calculation apparatus according to an embodiment of the invention.

FIG. 10 is a schematic structural diagram of an electronic device according to an embodiment of the invention.

**DETAILED DESCRIPTION OF THE EMBODIMENTS**

In order to clearly explain technical solutions in the embodiments of the invention, drawings used in description of the embodiments will be briefly described below. The drawings described below merely illustrate some embodiments of the invention. Based on these drawings, other drawings can be obtained by those skilled in the art without inventive effort.

In the description of the invention, it should be understood that terms such as "first" and "second" are used herein for purposes of description and are not intended to indicate or imply relative importance. In the description of the invention, it should be noted that, unless explicitly specified and limited otherwise, terms "include", "have", and any variations thereof are intended to cover non-exclusive inclusions. For example, a process, method, system, product, or device that includes a series of steps or units is not limited to listed steps or units, but may also optionally include unlisted steps or units or may optionally include other steps or units inherent to the process, method, product or device. For those of ordinary skill in the art, the specific meaning of the above terms in the invention can be understood according to specific circumstances. Furthermore, In the description of the invention, "a plurality of" means two or more than two, unless specified otherwise. In the description of the invention, "and/or" describes an association relationship between correlated objects, including three relationships. For example, "A and/or B" can mean A only, B only, or both A and B. In addition, the symbol "/" generally indicates an "or" relationship between the correlated objects preceding and succeeding the symbol.

The invention is described in detail below with reference to specific embodiments.

A variable-frequency heating device refers to a device that automatically adjusts operating power based on actual conditions, enabling a constant temperature of a heated object. A general non-variable-frequency heating device is a device that automatically adjusts a heating time and maintains a temperature by setting different temperatures. The variable-frequency heating device can not only deliver superior heating performance but also reduce power consumption and loss due to its operating principle of changing a power supply frequency to adjust a load, thus exhibiting a more prolonged service life than the non-variable-frequency heating device.

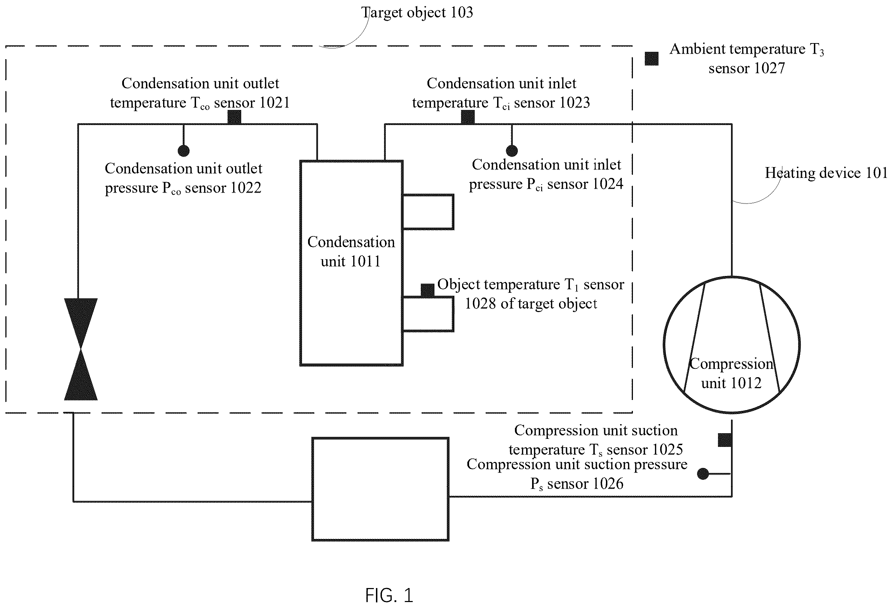

In one embodiment, as shown in FIG. 1, it is a schematic diagram of a scene in which a target object is heated by a heating device according to an embodiment of the invention. In this embodiment, the heating device 101 at least includes a condensation unit 1011 and a compression unit 1012, and the heating device 101 is configured to heat, based on an input instruction of a user, an object temperature of a target object 103 from an initial temperature to a set temperature set by the user. For example, the target object 103 is swimming pool water. The pool water entering the compression unit 1012 is heated by the heating device 101, and the heated pool water is further injected into a swimming pool until a temperature of the pool water is heated to the set temperature set by the user. In this embodiment, the heating device 101 is a variable-frequency heating device.

The heating scenario provided in this embodiment, there is included a condensation unit outlet temperature $T_{co}$ sensor 1021, a condensation unit outlet pressure $P_{co}$ sensor 1022, a condensation unit inlet temperature $T_{ci}$ sensor 1023, a condensation unit inlet pressure $P_{ci}$ sensor 1024, a compression unit suction temperature $T_s$ sensor 1025, a compression unit suction pressure $P_s$ sensor 1026, an ambient temperature $T_3$ sensor 1027, and an object temperature $T_1$ sensor 1028 of a target object 103.

The condensation unit outlet temperature $T_{co}$ sensor 1021, the condensation unit outlet pressure $P_{co}$ sensor 1022, the condensation unit inlet temperature $T_{ci}$ sensor 1023, and the condensation unit inlet pressure $P_{ci}$ sensor 1024 are disposed near the condensation unit 1011, and are configured to collect an outlet temperature $T_{co}$, an outlet pressure $P_{co}$, an inlet temperature $T_{ci}$, and an inlet pressure $P_{ci}$ of the condensation unit 1011, respectively. The compression unit suction temperature $T_s$ sensor 1025 and the compression unit suction pressure $P_s$ sensor 1026 are disposed near the compression unit 1012 and are configured to collect a suction temperature $T_s$ and a suction pressure $P_s$ of the compression unit 1012, respectively. The object temperature $T_1$ sensor 1028 of the target object is disposed near or on a surface of the target object 103 or at the heating device 101 and is configured to collect an object temperature $T_1$ of the target object 103. The ambient temperature $T_3$ sensor 1027 is disposed near the heating device 101 and is configured to collect an ambient temperature of the heating device 101.

It can be understood that the above is only an exemplary embodiment provided by the invention. The heating device 101 at least includes a condensation unit 1011 and a compression unit 1012, and may also include a throttling unit, an evaporating unit, a pipeline connecting a plurality of units, etc. The heating device 101 does not include the plurality of temperature sensors and the plurality of pressure sensors described above. In another embodiment, the heating device 101 may include the plurality of temperature sensors and the plurality of pressure sensors described above or any one or more other units required to perform a heating operation.

However, due to a variable operating frequency of the variable-frequency heating device, it is difficult to calculate time required to heat an object to a set temperature when using the variable-frequency heating device for heating. For example, when using the variable-frequency heating device to heat the swimming pool water, if there is no function to provide heating time required for the swimming pool to the user, the user cannot know the heating time required for the swimming pool during use of the variable-frequency heating device, and thus fails to appropriately choose when to turn on the variable-frequency heating device. When the user turns on the variable-frequency heating device too early, the temperature of the swimming pool water reaches the set temperature prematurely before use of the swimming pool. Subsequently, the variable-frequency heating device needs to continuously maintain the swimming pool water at the set temperature, resulting in high energy consumption and waste. When the user turns on the variable-frequency heating device too late, the temperature of the swimming pool water fails to reach the set temperature within expected usage time, leading to poor user experience.

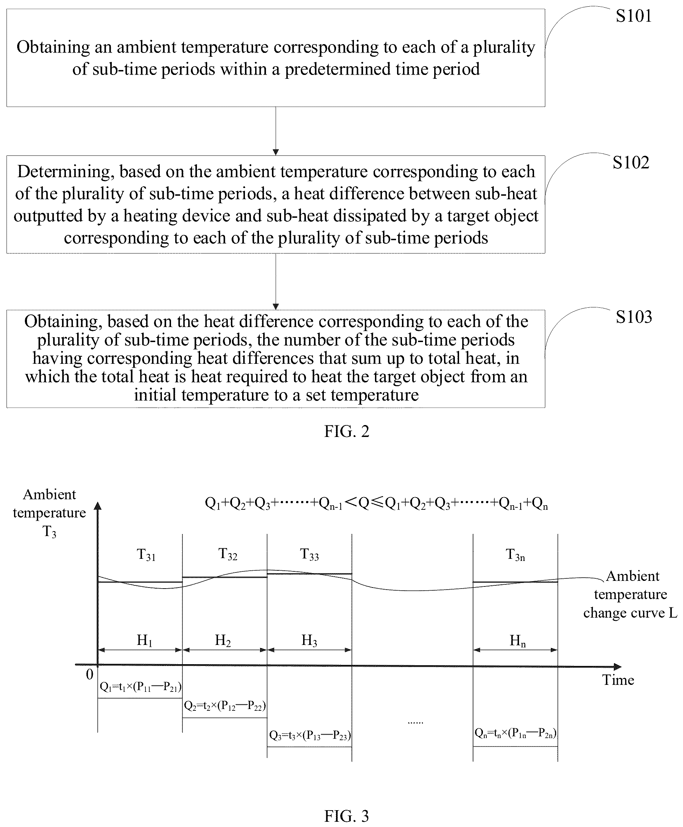

Therefore, in order to solve the above problems, an embodiment of the invention provides a method for calculating the heating time required for a variable-frequency heating device to heat a target object. In one embodiment, as shown in FIG. 2, it is a schematic flowchart of a heating time calculation method according to an embodiment of the invention. The method can be realized by a computer program and can be executable by a heating time calculation apparatus based on a von Neumann architecture. The computer program can be integrated into an application or executed as a standalone tool application.

Specifically, the heating time calculation method includes actions at blocks S101 to S103.

At block S101, an ambient temperature corresponding to each of a plurality of sub-time periods within a predetermined time period is obtained.

A method for determining time required for the heating device to heat the target object from the initial temperature to the set temperature is a ratio of heat required to increase a temperature of the target object from the initial temperature to the set temperature to a difference between heating power of the heating device and heat dissipation power of the target object. Specifically, determining the time required for the heating includes the following formula: $t = \dfrac{Q}{3600 \cdot (P_1 - P_2)}$, where t represents the time required to heat the target object from the initial temperature to the set temperature, in unit of h; Q represents total heat required to heat the target object from the initial temperature to the set temperature; $P_1$ represents output power of the heating device; and $P_2$ represents the heat dissipation power of the target object.

However, since the output power of the heating device is affected by the ambient temperature and the object temperature of the target object, and the heat dissipation power of the target object is also affected by a difference between a current object temperature and the ambient temperature, the above formula cannot fully express the time required to heat the target object from the initial temperature to the set temperature.

Therefore, in this embodiment, the heat difference between the sub-heat outputted by the heating device and the sub-heat dissipated by the target object in the sub-time period is determined, and the number of the sub-time periods having corresponding heat differences that sum up to the total heat is obtained by determining the heat required to heat the target object from the initial temperature to the set temperature. Therefore, the time required to heat the target object from the initial temperature to the set temperature is determined based on the number of required sub-time periods and a duration of the sub-time periods.

Specifically, the ambient temperature corresponding to each of the plurality of sub-time periods within the predetermined time period is obtained. For example, an ambient temperature change curve, a discrete set of ambient temperature data, or other forms of ambient temperature data for the predetermined time period, published by the Meteorological Bureau, may be obtained through public channels to obtain the ambient temperature corresponding to each of the plurality of sub-time periods. The predetermined time period may be a time period of any duration, and the duration of the predetermined time period may be determined by a predetermined duration in a memory of the heating device or may be set by the user as needed when starting to perform a heating task. For example, the user inputs the duration of the predetermined time period to the heating device through an input unit of the heating device, where input modes include touch, voice, remote control, etc. The input unit of the heating device includes an interactive display screen, a keyboard, a mouse, a remote controller, etc.

Durations of the plurality sub-time periods within the predetermined time period may be the same or different. For example, the duration of the predetermined time period is 12 hours, and the duration of each sub-time period is 0.5 hours. Thus, the predetermined time period includes 24 sub-time periods. For another example, the durations of the plurality sub-time periods sequentially increase from most recent to least recent. The duration of the predetermined time period is 12 hours. A duration of a starting sub-time period is 0.5 hours. A duration of a second sub-time period is 0.6 hours. A duration of a third sub-time period is 0.7 hours. For another example, the durations of plurality sub-time periods sequentially decrease from most recent to least recent. The duration of the predetermined time period is 12 hours. A duration of a starting sub-time period is 1 hour. A duration of a second sub-time period is 0.9 hours. A duration of a third sub-time period is 0.8 hours. A duration of a fourth sub-time period is 0.7 hours.

In this embodiment, by reasonably setting the duration corresponding to each of the plurality sub-time periods, the calculation of the heat difference corresponding to each sub-time period can be made more accurate and more in line with an actual operating condition of each heating device. For example, as the object temperature of the target object gets closer and closer to the set temperature, the output power of the heating device fluctuates around a relatively low power value. In this case, the durations of the plurality sub-time periods are set to sequentially increase from most recent to least recent, thereby reducing calculations of heat differences corresponding to later sub-time periods. As a result, computational logic resources of the heating device are saved, improving efficiency of determining the heating time.

At block S 102, a heat difference between sub-heat outputted by a heating device and sub-heat dissipated by a target object corresponding to each of the plurality of sub-time periods is determined based on the ambient temperature corresponding to each of the plurality of sub-time periods.

The sub-heat outputted by the heating device and the sub-heat dissipated by the target object corresponding to the sub-time period can be obtained based on the output power of the heating device and the heat dissipation power of the target object corresponding to the sub-time period, thereby determining the heat difference between the sub-heat outputted by the heating device and the sub-heat dissipated by the target object. The heat dissipation power of the target object is determined by a difference between the object temperature of the target object and the ambient temperature, and the output power of the heating device is determined by the ambient temperature and the object temperature of the target object.

As shown in FIG. 3, an ambient temperature change curve is taken as an example. FIG. 3 is a schematic coordinate diagram of time and ambient temperature according to an embodiment of the invention. The ambient temperature corresponding to each of the plurality sub-time periods is obtained based on an ambient temperature change curve L of the predetermined time period. For example, a sub-time period $H_1$ corresponds to an ambient temperature $T_{31}$, a sub-time period $H_2$ corresponds to an ambient temperature $T_{32}$, a sub-time period $H_3$ corresponds to an ambient temperature $T_{33}$, and a sub-time period $H_n$ corresponds to an ambient temperature $T_{3n}$.

A heat difference corresponding to the sub-time period $H_1$ is $Q_1=t_1\times(P_{11}-P_{21})$, where $t_1$ represents a duration corresponding to the sub-time period $H_1$; $P_{11}$ represents output power of the heating device corresponding to the sub-time period $H_1$; and $P_{21}$ represents heat dissipation power of the target object corresponding to the sub-time period $H_1$. A heat difference corresponding to the sub-time period $H_2$ is $Q_2=t_2\times(P_{12}-P_{22})$, where $t_2$ represents a duration corresponding to the sub-time period $H_2$; $P_{12}$ represents output power of the heating device corresponding to the sub-time period $H_2$; and $P_{22}$ represents heat dissipation power of the target object corresponding to the sub-time period $H_2$. A heat difference corresponding to the sub-time period $H_3$ is $Q_3=T_3\times(P_{13}-P_{23})$, where $t_3$ represents a duration corresponding to the sub-time period $H_3$; $P_{13}$ represents output power of the heating device corresponding to the sub-time period $H_3$; and $P_{23}$ represents heat dissipation power of the target object corresponding to the sub-time period $H_3$. A heat difference corresponding to the sub-time period $H_4$ is $Q_4=t_4\times(P_{14}-P_{24})$, $t_4$ represents a duration corresponding to the sub-time period $H_4$; $P_{14}$ represents output power of the heating device corresponding to the sub-time period $H_4$; and $P_{24}$ represents heat dissipation power of the target object corresponding to the sub-time period $H_4$.

At block S103, the number of the sub-time periods having corresponding heat differences that sum up to total heat is obtained based on the heat difference corresponding to each of the plurality of sub-time periods. The total heat is heat required to heat the target object from an initial temperature to a set temperature.

The total heat is the heat required to heat the target object from the initial temperature to the set temperature. Specifically, the heat required to heat the target object from the initial temperature to the set temperature can be obtained based on a size and specific heat capacity of the target object. Total heat Q required to heat the target object from the initial temperature to the set temperature includes the following formula: $Q = c \times V \times \rho_2 \times (T_2 - T_1)$, where c represents the specific heat capacity of the target object, in unit of kJ/(m2·°C); V represents a volume of the target object, in unit of m3; $\rho_2$ represents a density of the target object, in unit of kg/m3; $T_2$ represents the set temperature, in unit of °C; and $T_{11}$ represents a starting temperature of the target object, in unit of °C.

Based on the ambient temperature corresponding to each of the plurality of sub-time periods, as shown in FIG. 2, for the heat difference between sub-heat outputted by the heating device and the sub-heat dissipated by the target object corresponding to each of the plurality of sub-time periods, when n satisfies the following formula: $Q_1 + Q_2 + Q_3 ... + Q_{n-1} < Q \leq Q_1 + Q_2 + Q_3 ... + Q_{n-1} + Q_n$, a target value of n is obtained. That is, when total heat differences of n-1 sub-time periods is smaller than the total heat Q and total heat differences of n sub-time periods is greater than or equal to the total heat Q, the target value of n is obtained. For example, n is 3, the duration $t_1$ corresponding to the sub-time period $H_1$=the duration $t_2$ corresponding to the sub-time period $H_2$=the duration $t_3$ corresponding to the sub-time period $H_3$=0.5 hours, and the time required to heat the target object from the initial temperature to the set temperature is $t=nt_1$=1.5 hours.

In the embodiments of the invention, the heat difference between the sub-heat outputted by the heating device and the sub-heat dissipated by the target object in the sub-time period is determined based on the ambient temperature corresponding to each of the plurality of time periods, and the number of the sub-time periods having corresponding heat differences that sum up to the total heat is obtained by determining the heat required to heat the target object from the initial temperature to the set temperature. Therefore, the time required to heat the target object from the initial temperature to the set temperature is determined based on the number of required sub-time periods and the duration of the sub-time periods. That is, since an operating frequency of the variable-frequency heating device is not constant and changes under the influence of the ambient temperature and the object temperature of the target object, an impact of the heat difference in the sub-time period on sub-heat outputted by the heating device and sub-heat dissipated by the target object in a next sub-time period are fully considered in the embodiments of the invention by calculating the heat difference between the sub-heat outputted by the heating device and the sub-heat dissipated by the target object in the sub-time period. Thus, the accuracy of calculating the time required for the variable-frequency heating device to heat the object to the set temperature is improved. In this way, user experience is greatly enhanced.

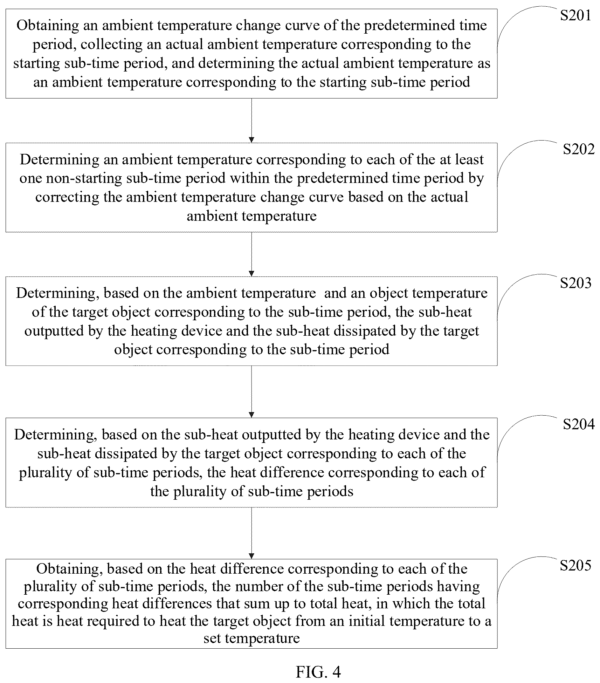

In one embodiment, as shown in FIG. 4, it is a schematic flowchart of a heating time calculation method according to an embodiment of the invention. The method can be realized by a computer program and can be executable by the heating time calculation apparatus based on the von Neumann architecture. The computer program can be integrated into an application or executed as a standalone tool application.

Specifically, the heating time calculation method includes actions at blocks S201 to S205.

At block S201, an ambient temperature change curve of the predetermined time period is obtained, an actual ambient temperature corresponding to the starting sub-time period is collected, and the actual ambient temperature is determined as an ambient temperature corresponding to the starting sub-time period.

Since the obtained ambient temperature change curve is a predicted value of the ambient temperature for the predetermined time period in the future and may be an ambient temperature value of an outdoor environment, the obtained ambient temperature curve may differ significantly from an ambient temperature where the heating device operates. For example, the target object is water in an indoor swimming pool, and the obtained ambient temperature curve corresponds to an ambient temperature change value of the outdoor environment. Therefore, in the embodiments of the invention, the ambient temperature change curve is corrected by collecting the actual ambient temperature corresponding to the starting sub-time period. It can be understood that when obtaining a discrete set of ambient temperature data or other forms of ambient temperature data within the predetermined time period instead of the ambient temperature change curve, the ambient temperatures within the plurality sub-time periods can also be corrected by performing the following steps. The invention imposes no limitations in this regard.

In this embodiment, the plurality of sub-time periods include a starting sub-time period and at least one non-starting sub-time period. The starting sub-time period can be understood as a first sub-time period when the heating device starts heating. The processor is configured to collect the actual ambient temperature of the heating device and the target object by means of an ambient temperature sensor. For example, as shown in FIG. 1, an ambient temperature $T_{31}$ is collected by the ambient temperature $T_3$ sensor 1027 as the ambient temperature of the starting sub-time period.

At block S202, an ambient temperature corresponding to each of the at least one non-starting sub-time period within the predetermined time period is determined by correcting the ambient temperature change curve based on the actual ambient temperature.

The ambient temperature corresponding to each of the at least one non-starting sub-time period within the predetermined time period is determined by correcting the ambient temperature change curve based on a difference between the actual ambient temperature corresponding to the starting sub-time period and a predicted ambient temperature corresponding to the ambient temperature change curve.

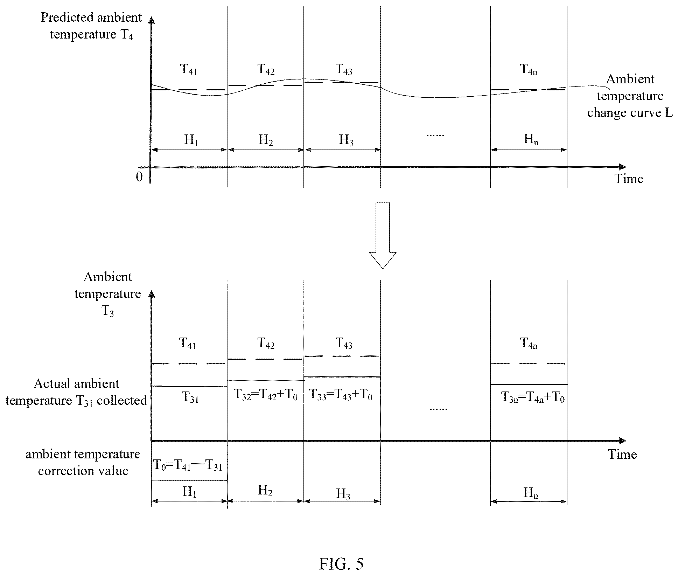

As shown in FIG. 5, FIG. 5 is a schematic flowchart of correcting an ambient temperature according to an embodiment of the invention, where a plurality of predicted ambient temperatures determined based on the ambient temperature change curve L include a predicted ambient temperature $T_{41}$ corresponding to a starting sub-time period $H_1$, a predicted ambient temperature $T_{42}$ corresponding to a non-starting sub-time period $H_2$, a predicted ambient temperature $T_{43}$ corresponding to a non-starting sub-time period $H_3$, ..., a predicted ambient temperature $T_{4n}$ corresponding to a non-starting sub-time period $H_n$.

Further, an ambient temperature correction value $T_0$ between the actual ambient temperature $T_{31}$ collected by the ambient temperature $T_3$ sensor and the predicted ambient temperature $T_{41}$ in the starting sub-time period $H_1$ is obtained. Therefore, the ambient temperature corresponding to the non-starting sub-period $H_2$ is $T_{32}=T_{42}+T_0$; the ambient temperature corresponding to the non-starting sub-period $H_3$ is $T_{33}=T_{43}+T_0$; and the ambient temperature corresponding to the non-starting sub-period $H_n$ is $T_{3n}=T_{4n}+T_0$.

At block S203, the sub-heat outputted by the heating device and the sub-heat dissipated by the target object corresponding to the sub-time period are determined based on the ambient temperature and an object temperature of the target object corresponding to the sub-time period.

Specifically, sub-heat dissipated by the target object corresponding to the sub-time period is determined based on a difference between the ambient temperature and the object temperature of the target object corresponding to the sub-time period; an operating parameter of the heating device corresponding to the sub-time period is determined based on the ambient temperature and the object temperature of the target object corresponding to the sub-time period; and the sub-heat outputted by the heating device corresponding to the sub-time period is determined based on the operating parameter of the heating device corresponding to the sub-time period.

In this embodiment, the operating parameter of the heating device corresponding to the sub-time period is determined based on an object temperature difference between an object temperature of the target object corresponding to the non-starting sub-time period and an object temperature of the target object corresponding to a previous sub-time period adjacent to the non-starting sub-time period and an ambient temperature difference between an ambient temperature corresponding to the non-starting sub-time period and an ambient temperature corresponding to the previous sub-time period adjacent to the non-starting sub-time period.

That is, the operating parameter includes a first operating parameter affected by the object temperature of the target object and a second operating parameter affected by the ambient temperature. In one embodiment, as shown in FIG. 1, the heating device 101 includes a condensation unit 1011 and a compression unit 1012. The first operating parameter includes at least one of an outlet temperature $T_{co1}$ of the condensation unit, an outlet pressure $P_{co1}$ of the condensation unit, an inlet temperature $T_{ci1}$ of the condensation unit, or an inlet pressure $P_{ci1}$ of the condensation unit. The second operating parameter includes at least one of a suction temperature $T_s$ of the compression unit or a suction pressure $P_s$ of the compression unit. It can be understood that the structure of the heating device shown in FIG. 1 is for illustration only, and the heating device shown in the embodiments of the invention may further include other units. That is, the operating parameter of the heating device may further include other types of operating parameters, which can be set by the user as needed.

Specifically, the plurality sub-time periods correspond to the starting sub-time period and the at least one non-starting sub-time period, and the sub-heat outputted by the heating device and the sub-heat dissipated by the target object corresponding to the starting sub-time period are determined based on the ambient temperature and the object temperature of the target object corresponding to the starting sub-time period.

The ambient temperature and the object temperature of the target object corresponding to the starting sub-time period are the actual ambient temperature and the object temperature of the target object collected by the sensors. For example, as shown in FIG. 1, the ambient temperature corresponding to the starting sub-time period is collected by the ambient temperature $T_3$ sensor 1027, an object temperature $T_{11}$ of the target object is collected by the object temperature $T_1$ sensor 1028 of the target object; and the outlet temperature $T_{co1}$ of the condensation unit, the outlet pressure $P_{co1}$ of the condensation unit, the inlet temperature $T_{ci1}$ of the condensation unit, the inlet pressure $P_{ci1}$ of the condensation unit, the suction temperature $T_{s1}$ of the compression unit, and the suction pressure $P_{s1}$ of the compression unit corresponding to the starting sub-time period are collected by the condensation unit outlet temperature $T_{co}$ sensor 1021, the condensation unit outlet pressure $P_{co}$ sensor 1022, the condensation unit inlet temperature $T_{ci}$ sensor 1023, the condensation unit inlet pressure $P_{ci}$ sensor 1024, the compression unit suction temperature $T_s$ sensor 1025, and the compression unit suction pressure $P_s$ sensor 1026, respectively.

Further, an enthalpy difference $DH_1$ corresponding to the starting sub-time period is obtained through a refrigerant physical property parameter data table stored in a memory, as well as the outlet temperature $T_{co1}$ of the condensation unit, the outlet pressure $P_{co1}$ of the condensation unit, the inlet temperature $T_{ci1}$ of the condensation unit, the inlet pressure $P_{ci1}$ of the condensation unit, which includes:

$$DH_1 = Hi_1 - Ho_1 ,$$

where $Hi_1$ represents an inlet specific enthalpy of the condensation unit, which can be obtained by querying the refrigerant physical property parameter data table through the inlet temperature $T_{ci1}$ of the condensation unit and the inlet pressure $P_{ci1}$ of the condensation unit, in unit of kJ/kg; $Ho_1$ represents an outlet specific enthalpy of the condensation unit, which can be obtained by querying the refrigerant physical property parameter data table through the outlet temperature $T_{co1}$ of the condensation unit and the outlet pressure $P_{co1}$ of the condensation unit, in unit of kJ/kg.

Through relevant parameters of the compression unit and the suction temperature $T_{s1}$ of the compression unit and the suction pressure $P_{s1}$ of the compression unit, a suction density of the compression unit is first obtained by querying the refrigerant physical property parameter data table, and then a flow rate $M_1$ of the compression unit is calculated using a formula, which includes:

$$M_1 = F \times D \times \rho_1 \times \eta_v ,$$

where $M_1$ represents a flow rate of the compression unit, in unit of kg/s, F, D and $\eta_v$ represents a collected value of the operating parameter of the compression unit (in unit of r/s), rated displacement of the compression unit (in unit of cm³/r), and volumetric efficiency of the compression unit, respectively. The suction saturation density $\rho_1$ is obtained by querying the refrigerant physical property parameter data table through the suction temperature $T_{s1}$ of the compression unit and the suction pressure $P_{s1}$ of the compression unit, in unit of kg/m³.

Further, the output power $P_{11}$ of the heating device is obtained by the enthalpy difference $DH_1$ and the flow rate $M_1$, which includes:

$$P_{11} = DH_1 \times M_1 ,$$

where $P_{11}$ represents the output power of the heating device in the starting sub-time period, in unit of kW.

The heat dissipation power $P_{21}$ of the target object corresponding to the starting sub-time period is determined based on the ambient temperature and the object temperature of the target object corresponding to the starting sub-time period, which includes:

$$P_{21} = k \times s \times ( T_{11} - T_{31} ) ,$$

where k represents a heat dissipation coefficient of the target object, in unit of kJ/(m²·°C), and s represents an area of the target object, in unit of m².

The heat difference $Q_1$ between the sub-heat outputted by the heating device and the sub-heat dissipated by the target object corresponding to the starting sub-time period is obtained based on the output power $P_{11}$ of the heating device and the heat dissipation power $P_{21}$ of the target object corresponding to the starting sub-time period, which includes:

$$Q_1 = t_1 \times (P_{11} - P_{21})$$
.

The ambient temperature and the object temperature of the target object corresponding to the starting sub-time period are actual values collected, and the ambient temperature and the object temperature of the target object corresponding to the non-sub-time period are predicted values. Specifically, the determining, based on the ambient temperature and the object temperature of the target object corresponding to the sub-time period, the sub-heat outputted by the heating device and the sub-heat dissipated by the target object corresponding to the sub-time period includes, when the sub-time period is the non-starting sub-time period: determining, based on the heat difference and the object temperature of the target object corresponding to a previous sub-time period adjacent to the non-starting sub-time period, the object temperature of the target object corresponding to the non-starting sub-time period; and determining, based on the object temperature of the target object and the ambient temperature corresponding to the non-starting sub-time period, the sub-heat outputted by the heating device and the sub-heat dissipated by the target object corresponding to the non-starting sub-time period.

That is, subsequent to obtaining the heat difference of the previous sub-time period and the object temperature of the target object in the current sub-time period, the object temperature of the current sub-time period can be obtained by considering an impact of the heat difference of the previous sub-time period on the object temperature based on the object temperature of the current sub-time period. Therefore, the heat dissipation power of the target object in the current sub-time period can be obtained based on a difference between the object temperature and the ambient temperature in the current sub-time period. Thus, the sub-heat dissipated by the target object in the current sub-time period is obtained.

Further, subsequent to obtaining the heat difference of the previous sub-time period and the object temperature of the target object in the current sub-time period, the operating parameter of the heating device corresponding to the sub-time period is obtained based on an object temperature difference between an object temperature of the target object corresponding to the current sub-time period and an object temperature of the target object corresponding to a previous sub-time period adjacent to the current sub-time period and an ambient temperature difference between an ambient temperature corresponding to the current sub-time period and an ambient temperature corresponding to the previous sub-time period adjacent to the current sub-time period. Therefore, the output power of the heating device and even the sub-heat outputted by the heating device are determined based on the operating parameter of the heating device corresponding to the current sub-time period.

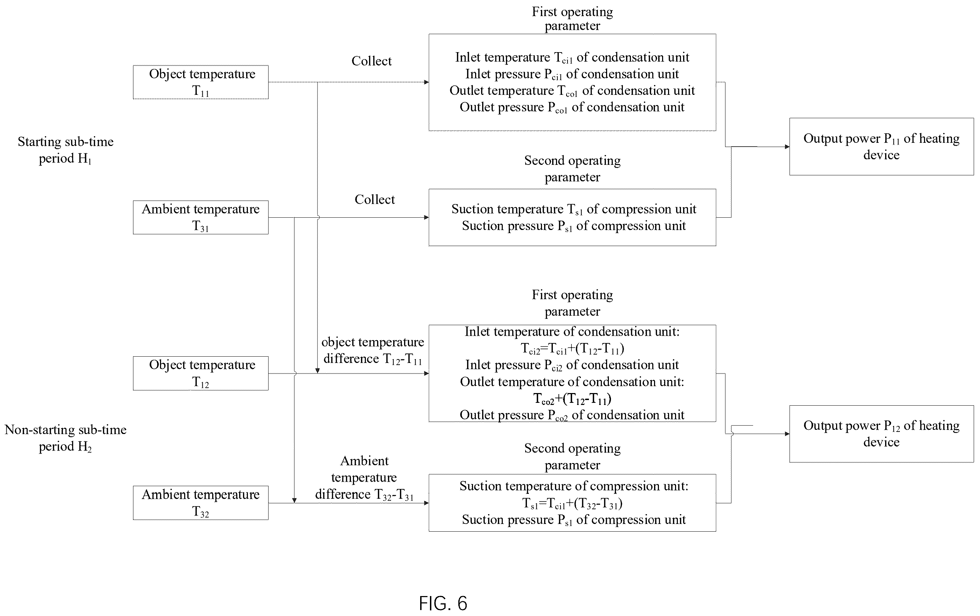

As shown in FIG. 6, FIG. 6 is a schematic flowchart of determining output power of a heating device according to an embodiment of the invention. The object temperature $T_{11}$ and the ambient temperature $T_{31}$ are collected in the starting sub-time period $H_1$. The first operating parameter, which includes the outlet temperature $T_{co1}$ of the condensation unit, the outlet pressure $P_{co1}$ of the condensation unit, the inlet temperature $T_{ci1}$ of the condensation unit, and the inlet pressure $P_{ci1}$ of the condensation unit, is determined based on the object temperature $T_{11}$. The second operating parameter, which includes the suction temperature $T_s$ of the compression unit and the suction pressure $P_s$ of the compression unit, is determined based on the ambient temperature $T_{31}$. Thus, the output power $P_{11}$ of the heating device is obtained.

Further, in the non-starting sub-time period $H_2$ which is adjacent to the starting sub-time period $H_1$, the first operating parameter corresponding to the non-starting sub-time period $H_2$ is determined based on an object temperature difference $(T_{12}-T_{11})$, and the second operating parameter corresponding to the non-starting sub-time period $H_2$ is determined based on an ambient temperature difference $(T_{32}-T_{31})$. Thus, the output power $P_{12}$ of the heating device corresponding to the non-starting sub-time period $H_2$ is obtained.

The output power $P_{13}$ of the heating device corresponding to the non-starting sub-period $H_3$ adjacent to the non-starting sub-time period $H_2$ can be obtained based on the above description, and details thereof are omitted herein.

At block S204, the heat difference corresponding to each of the plurality of sub-time periods is determined based on the sub-heat outputted by the heating device and the sub-heat dissipated by the target object corresponding to each of the plurality of sub-time periods.

The heat difference between the sub-heat outputted by the heating device and the sub-heat dissipated by the target object is determined by obtaining, based on the output power of the heating device and the heat dissipation power of the target object corresponding to the sub-time period, the sub-heat outputted by the heating device and the sub-heat dissipated by the target object corresponding to the sub-time period. As shown in FIG. 3, details thereof are omitted herein.

At block S205, the number of the sub-time periods having corresponding heat differences that sum up to total heat is obtained based on the heat difference corresponding to each of the plurality of sub-time periods. The total heat is heat required to heat the target object from an initial temperature to a set temperature.

Reference can be made to the action at the block S103, and details thereof are omitted herein.

In the embodiments of the invention, the heat difference between the sub-heat outputted by the heating device and the sub-heat dissipated by the target object in the sub-time period is determined based on the ambient temperature corresponding to each of the plurality of time periods, and the number of the sub-time periods having corresponding heat differences that sum up to the total heat is obtained by determining the heat required to heat the target object from the initial temperature to the set temperature. Therefore, the time required to heat the target object from the initial temperature to the set temperature is determined based on the number of required sub-time periods and the duration of the sub-time periods. That is, since the operating frequency of the variable-frequency heating device is not constant and changes under the influence of the ambient temperature and the object temperature of the target object, the impact of the heat difference in the sub-time period on the sub-heat outputted by the heating device and the sub-heat dissipated by the target object in the next sub-time period are fully considered in the embodiments of the invention by calculating the heat difference between the sub-heat outputted by the heating device and the sub-heat dissipated by the target object in the sub-time period. Thus, the accuracy of calculating the time required for the variable-frequency heating device to heat the object to the set temperature is improved. In this way, the user experience is greatly enhanced.

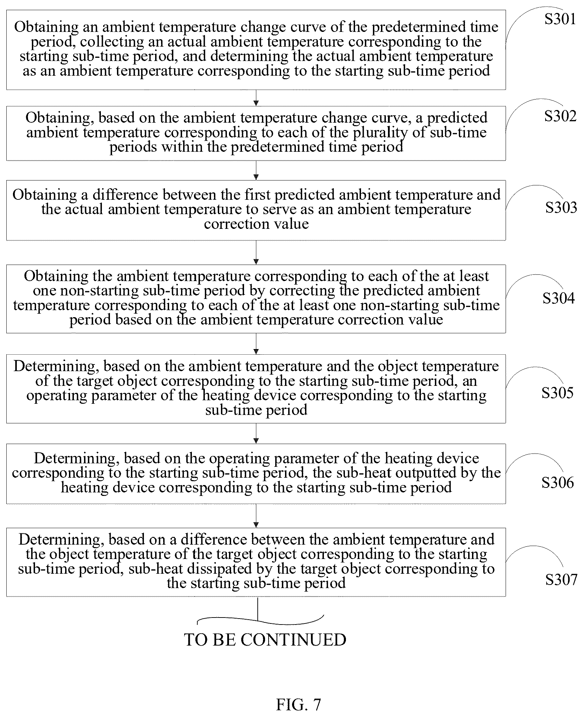

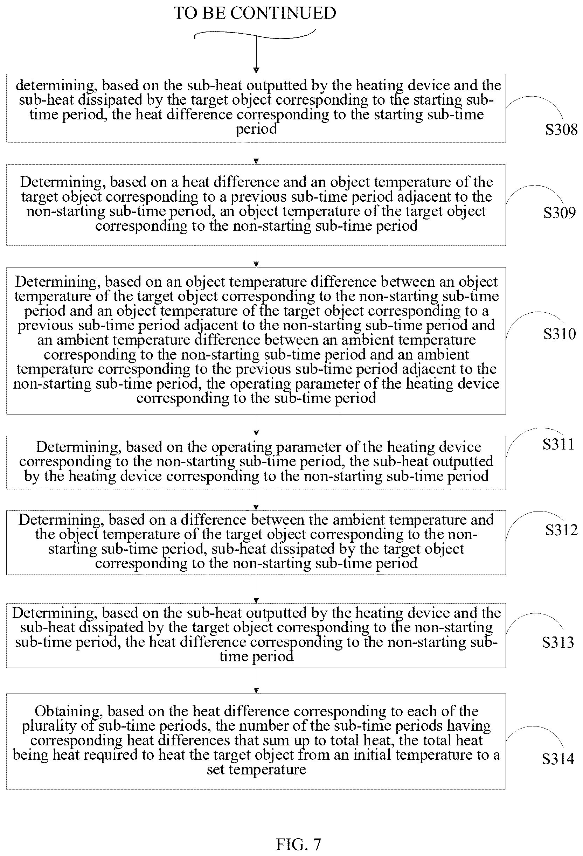

In one embodiment, as shown in FIG. 7, it is a schematic flowchart of a heating time calculation method according to an embodiment of the invention. The method can be realized by a computer program and can be executable by the heating time calculation apparatus based on the von Neumann architecture. The computer program can be integrated into an application or executed as a standalone tool application.

Specifically, the heating time calculation method includes actions at block S301 to S314.

At block S301, an ambient temperature change curve of the predetermined time period is obtained, an actual ambient temperature corresponding to the starting sub-time period is collected, and the actual ambient temperature is determined as an ambient temperature corresponding to the starting sub-time period.

In this embodiment, the plurality of sub-time periods include a starting sub-time period and at least one non-starting sub-time period. The starting sub-time period can be understood as a first sub-time period when the heating device starts heating. The processor is configured to collect the actual ambient temperature of the heating device and the target object by means of the ambient temperature sensor. For example, as shown in FIG. 1, the ambient temperature $T_{31}$ is collected by the ambient temperature $T_3$ sensor 1027 as the ambient temperature of the starting sub-time period.

At block S302, a predicted ambient temperature corresponding to each of the plurality of sub-time periods in the predetermined time period is obtained based on the ambient temperature change curve.

The predetermined time period is divided into the plurality of sub-time periods, and the predicted ambient temperature of the ambient temperature change curve corresponding to each of the plurality of sub-time periods in the predetermined time period is obtained. As shown in FIG. 5, the predicted ambient temperatures include the predicted ambient temperature $T_{41}$ corresponding to the starting sub-time period $H_1$, the predicted ambient temperature $T_{42}$ corresponding to the non-starting sub-time period $H_2$, the predicted ambient temperature $T_{43}$ corresponding to the non-starting sub-time period $H_3$, ..., the predicted ambient temperature $T_{4n}$ corresponding to the non-starting sub-time period $H_n$.

At block S303, a difference between the first predicted ambient temperature and the actual ambient temperature is obtained to serve as an ambient temperature correction value.

The ambient temperature corresponding to each of the at least one non-starting sub-time period within the predetermined time period is determined by correcting the ambient temperature change curve based on the actual ambient temperature. Specifically, the ambient temperature correction value $T_0$ between the actual ambient temperature $T_{31}$ collected by the ambient temperature sensor $T_3$ and the predicted ambient temperature $T_{41}$ in the starting sub-time period $H_1$ is obtained.

At block S304, the ambient temperature corresponding to each of the at least one non-starting sub-time period is obtained by correcting the predicted ambient temperature corresponding to each of the at least one non-starting sub-time period based on the ambient temperature correction value.

The ambient temperature corresponding to each of the at least one non-starting sub-time period within the predetermined time period is determined by correcting the ambient temperature change curve based on a difference between the actual ambient temperature corresponding to the starting sub-time period and the predicted ambient temperature corresponding to the ambient temperature change curve. As shown in FIG. 5, details thereof are omitted herein.

At block S305, an operating parameter of the heating device corresponding to the starting sub-time period is determined based on a difference between the ambient temperature and the object temperature of the target object corresponding to the starting sub-time period.

The ambient temperature and the object temperature of the target object corresponding to the starting sub-time period are the actual ambient temperature and the object temperature of the target object collected by the sensors. For example, as shown in FIG. 1, the ambient temperature corresponding to the starting sub-time period is collected by the ambient temperature $T_3$ sensor 1027, an object temperature $T_{11}$ of the target object is collected by the object temperature $T_1$ sensor 1028 of the target object; and the outlet temperature $T_{co1}$ of the condensation unit, the outlet pressure $P_{co1}$ of the condensation unit, the inlet temperature $T_{ci1}$ of the condensation unit, the inlet pressure $P_{ci1}$ of the condensation unit, the suction temperature $T_{s1}$ of the compression unit, and the suction pressure $P_{s1}$ of the compression unit corresponding to the starting sub-time period are collected by the condensation unit outlet temperature $T_{co}$ sensor 1021, the condensation unit outlet pressure $P_{co}$ sensor 1022, the condensation unit inlet temperature $T_{ci}$ sensor 1023, the condensation unit inlet pressure $P_{ci}$ sensor 1024, the compression unit suction temperature $T_s$ sensor 1025, and the compression unit suction pressure $P_s$ sensor 1026, respectively.

At block S306, the sub-heat outputted by the heating device corresponding to the starting sub-time period is determined based on the operating parameter of the heating device corresponding to the starting sub-time period.

An enthalpy difference $DH_1$ corresponding to the starting sub-time period is obtained through a refrigerant physical property parameter data table stored in a memory, as well as the outlet temperature $T_{co1}$ of the condensation unit, the outlet pressure $P_{co1}$ of the condensation unit, the inlet temperature $T_{ci1}$ of the condensation unit, the inlet pressure $P_{ci1}$ of the condensation unit, which includes:

$$DH_1 = Hi_1 - Ho_1,$$

where $Hi_1$ represents an inlet specific enthalpy of the condensation unit, which can be obtained by querying the refrigerant physical property parameter data table through the inlet temperature $T_{ci1}$ of the condensation unit and the inlet pressure $P_{ci1}$ of the condensation unit, in unit of kJ/kg; $Ho_1$ represents an outlet specific enthalpy of the condensation unit, which can be obtained by querying the refrigerant physical property parameter data table through the outlet temperature $T_{co1}$ of the condensation unit and the outlet pressure $P_{co1}$ of the condensation unit, in unit of kJ/kg.

Through relevant parameters of the compression unit and the suction temperature $T_{s1}$ of the compression unit and the suction pressure $P_{s1}$ of the compression unit, a suction density of the compression unit is first obtained by querying the refrigerant physical property parameter data table, and then a flow rate $M_1$ of the compression unit is calculated using a formula, which includes:

$$M_1 = F \times D \times \rho_1 \times \eta_v ,$$

where $M_1$ represents a flow rate of the compression unit, in unit of kg/s, F, D and $\eta_v$ represents a collected value of the operating parameter of the compression unit (in unit of r/s), rated displacement of the compression unit (in unit of $cm^3/r$), and volumetric efficiency of the compression unit, respectively. The suction saturation density $\rho_1$ is obtained by querying the refrigerant physical property parameter data table through the suction temperature $T_{s1}$ of the compression unit and the suction pressure $P_{s1}$ of the compression unit, in unit of $kg/m^3$.

Further, the output power $P_{11}$ of the heating device is obtained by the enthalpy difference $DH_1$ and the flow rate M, which includes:

$$P_{11} = DH_1 \times M_1 ,$$

where $P_{11}$ represents the output power of the heating device in the starting sub-time period, in unit of kW.

At block 307, sub-heat dissipated by the target object corresponding to the starting sub-time period is determined based on a difference between the ambient temperature and the object temperature of the target object corresponding to the starting sub-time period.

The heat dissipation power $P_{21}$ of the target object corresponding to the starting sub-time period is determined based on the ambient temperature and the object temperature of the target object corresponding to the starting sub-time period, which includes:

$$P_{21} = k \times s \times ( T_{11} - T_{31} ) ,$$

where k represents a heat dissipation coefficient of the target object, in unit of $kJ/(m^2 \cdot {}^\circ C)$, and s represents an area of the target object, in unit of $m^2$.

At block S308, the heat difference corresponding to the starting sub-time period is determined based on the sub-heat outputted by the heating device and the sub-heat dissipated by the target object corresponding to the starting sub-time period.

The heat difference $Q_1$ between the sub-heat outputted by the heating device and the sub-heat dissipated by the target object corresponding to the starting sub-time period is obtained based on the output power $P_{11}$ of the heating device and the heat dissipation power $P_{21}$ of the target object corresponding to the starting sub-time period, which includes:

$$Q_1 = t_1 \times (P_{11} - P_{21})$$ .

At block S309, an object temperature of the target object corresponding to the non-starting sub-time period is determined based on a heat difference and an object temperature of the target object corresponding to a previous sub-time period adjacent to the non-starting sub-time period.

The first non-starting sub-time period adjacent to the starting sub-time period is taken as an example. The heat difference of the starting sub-time period is $Q_1$, and thus an object temperature of the target object corresponding to the first non-starting sub-time period is:

$$T_{12} = \frac{Q_1}{c \times V \times \rho_2} + T_{11}$$,

where V represents a volume of the target object, in unit of m$^3$, and $\rho_2$ represents a density of the target object, in unit of kg/m$^3$.

At block S310, the operating parameter of the heating device corresponding to the sub-time period is determined based on an object temperature difference between an object temperature of the target object corresponding to the non-starting sub-time period and an object temperature of the target object corresponding to a previous sub-time period adjacent to the non-starting sub-time period and an ambient temperature difference between an ambient temperature corresponding to the non-starting sub-time period and an ambient temperature corresponding to the previous sub-time period adjacent to the non-starting sub-time period.

Specifically, the difference in the object temperature of the target object is $(T_{12}-T_{11})$, and the difference in the ambient temperature is $(T_{32}-T_{31})$.

In the non-starting sub-time period H$_2$, the inlet temperature of the condensation unit is $T_{ci2} = T_{ci1} + (T_{12} - T_{11})$; the inlet pressure of the condensation unit is $P_{ci2}$=a saturated pressure corresponding to [a saturated temperature corresponding to $P_{ci1}+(T_{12}-T_{11})$]; the outlet temperature of the condensation unit is $T_{co2} = T_{co1} + (T_{12} - T_{11})$; and the outlet pressure of the condensation unit is $P_{co2}$= a saturated pressure corresponding to [a saturated temperature corresponding to $P_{co1}+(T_{co1}-T_{11})$]. Therefore, an enthalpy difference DH$_2$ corresponding to the non-starting sub-time period H$_2$ is obtained.

In the non-starting sub-time period H$_2$, the suction temperature of the compression unit is $T_{s2} = T_{s1} + (T_{32} - T_{31})$; the suction pressure of the condensation unit is $P_{s2}$= a saturation pressure corresponding to [a saturated temperature corresponding to $P_{s1}+(T_{32}-T_{31})$]. Therefore, a saturated suction density $\rho_{12}$ corresponding to the non-starting sub-time period H$_2$ is obtained.

At block S311, the sub-heat outputted by the heating device corresponding to the non-starting sub-time period is determined based on the operating parameter of the heating device corresponding to the non-starting sub-time period.

The output power $P_{12}$ of the heating device corresponding to the non-starting sub-time period H$_2$ is determined subsequent to obtaining the enthalpy difference DH$_2$ and the saturated suction density $\rho_{12}$ corresponding to the non-starting sub-time period H$_2$, which includes:

$$P_{12} = DH_2 \times M_2 = DH_2 \times F \times D \times \rho_{12} \times \eta_v$$ .

Therefore, the sub-heat outputted by the heating device corresponding to the non-starting sub-time period H$_2$ is $Q_2=t_2 \times P_{12}$, where $t_2$ represents a duration corresponding to the non-starting sub-time period H$_2$.

At block S312, sub-heat dissipated by the target object corresponding to the non-starting sub-time period is determined based on a difference between the ambient temperature and the object temperature of the target object corresponding to the non-starting sub-time period.

The non-starting sub-time period H$_2$ is taken as an example, the object temperature corresponding to the first non-starting sub-time period H$_2$ is:

$$T_{12} = \frac{Q_1}{c \times V \times \rho_2} + T_{11}$$ .

Heat dissipation power $P_{22}$ of the target object corresponding to the non-starting sub-time period H$_2$ is determined based on the ambient temperature and the object temperature of the target object corresponding to the non-starting sub-time period H$_2$, which includes:

$$P_{22} = k \times s \times ( T_{12} - T_{32})$$,

where k represents a heat dissipation coefficient of the target object, in unit of $kJ/(m^2 \cdot °C)$, and s represents an area of the target object, in unit of $m^2$.

At block S313, the heat difference corresponding to the non-starting sub-time period is determined based on the sub-heat outputted by the heating device and the sub-heat dissipated by the target object corresponding to the non-starting sub-time period.

The non-starting sub-time period $H_2$ is taken as an example. The heat difference corresponding to the non-starting sub-time period $H_2$ is obtained based on the heat dissipation power $P_{22}$ of the target object corresponding to the non-starting sub-time period $H_2$ and the output power $P_{12}$ of the heating device, which includes:

$$Q_2 = t_2 \times (P_{12} - P_{22})$$.

By analogy, the object temperature corresponding to the non-starting sub-time period $H_n$ is:

$$T_{1n} = \frac{Q_{n-1}}{c \times V \times \rho_2} + T_{1n-1}$$.

The difference in the object temperature of the target object is $(T_{1n}-T_{1n-1})$, and the difference in the ambient temperature is $(T_{3n}-T_{3n-1})$.

An inlet temperature of the condensation unit corresponding to the non-starting sub-time period $H_n$ is:

$$T_{cin} = T_{cin-1} + ( T_{1n} - T_{1n-1})$$.

An inlet pressure of the condensation unit corresponding to the non-starting sub-time period $H_n$ is:

$P_{cin}$=a saturation pressure corresponding to [a saturation temperature corresponding to $P_{cin}+(T_{1n}-T_{1n-1})$].

An outlet temperature of the condensation unit corresponding to the non-starting sub-time period $H_n$ is:

$$T_{con} = T_{con-1} + ( T_{1n} - T_{1n-1})$$.

The outlet pressure of the condensation unit corresponding to the non-starting sub-time period $H_n$ is:

$P_{con}$=a saturation pressure corresponding to [a saturation temperature corresponding to $P_{con-1}+(T_{1n}-T_{1n-1})$].

Therefore, an enthalpy difference $DH_n$ corresponding to the non-starting sub-time period $H_n$ is obtained.

A suction temperature of the compression unit corresponding to the non-starting sub-time period $H_n$ is:

$$T_{sn} = T_{sn-1} + ( T_{3n} - T_{3n-1})$$.

A suction pressure of the condensation unit corresponding to the non-starting sub-time period $H_n$ is:

$P_{sn}$= a saturation pressure corresponding to [a saturation temperature corresponding to $P_{sn-1}+(T_{3n}-T3n-1)$].

Therefore, the saturated suction density $\rho_{1n}$ corresponding to the non-starting sub-time period $H_n$ is obtained. The output power $P_{1n}$ of the heating device corresponding to the non-starting sub-time period $H_n$ is determined subsequent to obtaining the enthalpy difference $DH_n$ and the saturated suction density $\rho_{1n}$ corresponding to the non-starting sub-time period $H_n$.

The object temperature of the target object corresponding to the non-starting sub-time period $H_n$ is:

$$T_{1n} = \frac{Q_{n-1}}{c \times V \times \rho_2} + T_{1n-1}$$

.

Determining heat dissipation power $P_{2n}$ of the target object corresponding to the non-starting sub-time period $H_n$ is determined based on the ambient temperature and the object temperature of the target object corresponding to the non-starting sub-time period $H_n$, which includes:

$$P_{2n} = k \times s \times (T_{1n} - T_{3n})$$

.

Therefore, a heat difference corresponding to the non-starting sub-time period $H_n$ is:

$$Q_n = t_n \times (P_{1n} - P_{2n})$$

.

At block S314, the number of the sub-time periods having corresponding heat differences that sum up to total heat is obtained based on the heat difference corresponding to each of the plurality of sub-time periods. The total heat is heat required to heat the target object from an initial temperature to a set temperature.

Reference can be made to the action at the block S103, and details thereof are omitted herein.

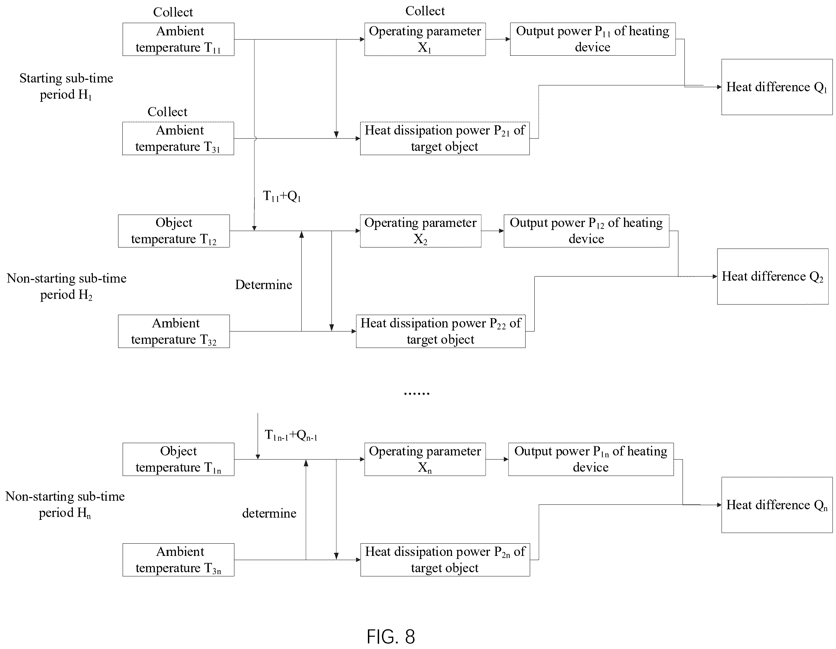

As shown in FIG. 8, FIG. 8 is a schematic flowchart of another heating time calculation method according to an embodiment of the invention. An operating parameter $X_1$ is obtained based on the ambient temperature $T_{11}$ and the object temperature $T_{31}$ corresponding to the starting sub-time period $H_1$, thus the output power $P_{11}$ of the heating device and the heat dissipation power $P_{21}$ of the target object are obtained, and thus, the heat difference $Q_1$ corresponding to the starting sub-time period $H_1$ is obtained. An operating parameter $X_2$ is further obtained based on the ambient temperature $T_{12}$ and the object temperature $T_{32}$ corresponding to the non-starting sub-time period $H_2$, in which the object temperature $T_{32}$ is obtained based on the object temperature $T_{31}$ and the heat difference $Q_1$. Thus, the output power $P_{12}$ of the heating device and the heat dissipation power $P_{22}$ of the target object are obtained. Thus, the heat difference $Q_2$ corresponding to the non-starting sub-time period $H_2$ is obtained. The heat difference $Q_n$ corresponding to the non-starting sub-time period $H_n$ is obtained by analogy, and a target value of n is obtained when the following formula is satisfied:

$$Q_1 + Q_2 + Q_3 \ldots + Q_{n-1} < Q \le Q_1 + Q_2 + Q_3 \ldots + Q_{n-1} + Q_n$$

.

That is, when total heat differences in n-1 sub-time periods is smaller than total heat Q and total heat differences in n sub-time periods are greater than or equal to the total heat Q, the target value of n is obtained. For example, if n is 3, and the duration $t_1$ corresponding to the sub-time period $H_1$=the duration $t_2$ corresponding to the sub-time period $H_2$=the duration $t_3$ corresponding to the sub-time period $H_3$=0.5 hours, the time required to heat the target object from the initial temperature to the set temperature is $t=nt_1$=1.5 hours.

In the embodiments of the invention, the heat difference between the sub-heat outputted by the heating device and the sub-heat dissipated by the target object in the sub-time period is determined based on the ambient temperature corresponding to each of the plurality of time periods, and the number of the sub-time periods having corresponding heat differences that sum up to the total heat by determining the heat required to heat the target object from the initial temperature to the set temperature. Therefore, the time required to heat the target object from the initial temperature to the set temperature is determined based on the number of required sub-time periods and the duration of the sub-time periods. That is, since the operating frequency of the variable-frequency heating device is not constant and changes under the influence of the ambient temperature and the object temperature of the target object, the impact of the heat difference in the sub-time period on the sub-heat outputted by the heating device and the sub-heat dissipated by the target object in the next sub-time period are fully considered in the embodiments of the invention by calculating the heat difference between the sub-heat outputted by the heating device and the sub-heat dissipated by the target object in the sub-time period. Thus, the accuracy of calculating the time required for the variable-frequency heating device to heat the object to the set temperature is improved. In this way, the user experience is greatly enhanced.

The following are apparatus embodiments of the invention, which can be used to execute the method embodiments of the invention. For details not disclosed in the apparatus embodiments of the invention, reference can be made to the method embodiments of the invention.

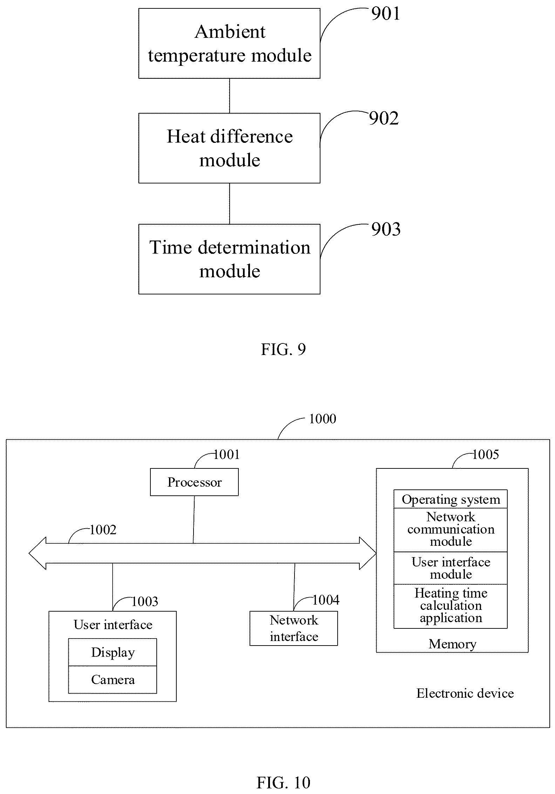

Referring to FIG. 9, FIG. 9 shows a schematic structural diagram of a heating time calculation apparatus according to an embodiment of the invention. The heating time calculation apparatus can be realized as all or part of an apparatus through software, hardware, or a combination thereof. The heating time calculation apparatus includes an ambient temperature module 901, a heat difference module 902, and a time determination module 903.

The ambient temperature module 901 is configured to obtain an ambient temperature corresponding to each of a plurality of sub-time periods within a predetermined time period. The heat difference module 902 is configured to determine, based on the ambient temperature corresponding to each of the plurality of sub-time periods, heat difference between sub-heat outputted by a heating device and sub-heat dissipated by a target object corresponding to each of the plurality of sub-time period. The time determination module 903 is configured to obtain, based on the heat difference corresponding to each of the plurality of sub-time periods, the number of the sub-time periods having corresponding heat differences that sum up to total heat. The total heat is heat required to heat the target object from an initial temperature to a set temperature.

In one embodiment, the heat difference module 902 includes a first determination unit and a second determination unit. The first determination unit is configured to determine, based on the ambient temperature and an object temperature of the target object corresponding to the sub-time period, the sub-heat outputted by the heating device and the sub-heat dissipated by the target object corresponding to the sub-time period. The object temperature of the target object is affected by sub-heat outputted by the heating device corresponding to a previous sub-time period adjacent to the sub-time period. The second determination unit is configured to determine, based on the sub-heat outputted by the heating device and the sub-heat dissipated by the target object corresponding to each of the plurality of sub-time periods, the heat difference corresponding to each of the plurality of sub-time periods.

In one embodiment, the plurality sub-time periods include a starting sub-time period and at least one non-starting sub-time period. When the sub-time period is the non-starting sub-time period, the first determination unit includes a first determination subunit and a second determination subunit. The first determination subunit is configured to determine, based on a heat difference and an object temperature of the target object corresponding to a previous sub-time period adjacent to the non-starting sub-time period, an object temperature of the target object corresponding to the non-starting sub-time period. The second determination subunit is configured to determine, based on the object temperature of the target object and an ambient temperature corresponding to the non-starting sub-time period, the sub-heat outputted by the heating device and the sub-heat dissipated by the target object corresponding to the non-starting sub-time period.

In one embodiment, when the sub-time period is the starting sub-time period, the first determination unit includes a third determination subunit configured to determine, based on an ambient temperature and an object temperature of the target object corresponding to the starting sub-time period, sub-heat outputted by the heating device and sub-heat dissipated by the target object corresponding to the starting sub-time period.

In one embodiment, the first determination unit includes a difference determination subunit, a parameter determination subunit, and a heat determination subunit. The difference determination subunit is configured to determine, based on a difference between the ambient temperature and the object temperature of the target object corresponding to the sub-time period, sub-heat dissipated by the target object corresponding to the sub-time period. The parameter determination subunit is configured to determine determining, based on the ambient temperature and the object temperature of the target object corresponding to the sub-time period, an operating parameter of the heating device corresponding to the sub-time period. The heat determination subunit is configured to determine determining, based on the operating parameter of the heating device corresponding to the sub-time period, the sub-heat outputted by the heating device corresponding to the sub-time period.

In one embodiment, the operating parameter includes a first operating parameter affected by the object temperature of the target object and a second operating parameter affected by the ambient temperature.

In one embodiment, the heating device includes a condensation unit and a compression unit. The first operating parameter includes at least one of an inlet temperature of the condensation unit, an inlet pressure of the condensation unit, an outlet temperature of the condensation unit, or an outlet pressure of the condensation unit. The second operating parameter includes at least one of a suction temperature of the compression unit or a suction pressure of the compression unit.

In one embodiment, the plurality sub-time periods include a starting sub-time period and at least one non-starting sub-time period. The parameter determination subunit is specifically configured to determine, based on an object temperature difference between an object temperature of the target object corresponding to the non-starting sub-time period and an object temperature of the target object corresponding to a previous sub-time period adjacent to the non-starting sub-time period and an ambient temperature difference between an ambient temperature corresponding to the non-starting sub-time period and an ambient temperature corresponding to the previous sub-time period adjacent to the non-starting sub-time period, the operating parameter of the heating device corresponding to the sub-time period.

In one embodiment, the plurality of sub-time periods include a starting sub-time period and at least one non-starting sub-time period that are ordered chronologically from most recent to least recent. The ambient temperature module 901 includes an actual collection unit and a curve correction unit. The actual collection unit is configured to obtain an ambient temperature change curve of the predetermined time period, collect an actual ambient temperature corresponding to the starting sub-time period, and determine the actual ambient temperature as an ambient temperature corresponding to the starting sub-time period. The curve correction unit is configured to determine an ambient temperature corresponding to each of the at least one non-starting sub-time period within the predetermined time period by correcting the ambient temperature change curve based on the actual ambient temperature.

In one embodiment, the curve correction unit includes a temperature prediction subunit, an ambient difference subunit, and a curve correction subunit. The temperature prediction subunit is configured to obtain, based on the ambient temperature change curve, a predicted ambient temperature corresponding to each of the plurality of sub-time periods within the predetermined time period. A plurality of predicted ambient temperatures include a first predicted ambient temperature corresponding to the starting sub-time period and a predicted ambient temperature corresponding to each of the at least one non-starting sub-time period. The ambient difference subunit is configured to obtain a difference between the first predicted ambient temperature and the actual ambient temperature to serve as an ambient temperature correction value. The curve correction subunit is configured to obtain the ambient temperature corresponding to each of the at least one non-starting sub-time period by correcting the predicted ambient temperature corresponding to each of the at least one non-starting sub-time period based on the ambient temperature correction value.

In the embodiments of the invention, the heat difference between the sub-heat outputted by the heating device and the sub-heat dissipated by the target object in the sub-time period is determined based on the ambient temperature corresponding to each of the plurality of time periods, and the number of the sub-time periods having corresponding heat differences that sum up to the total heat is obtained by determining the heat required to heat the target object from the initial temperature to the set temperature. Therefore, the time required to heat the target object from the initial temperature to the set temperature is determined based on the number of required sub-time periods and the duration of the sub-time periods. That is, since the operating frequency of the variable-frequency heating device is not constant and changes under the influence of the ambient temperature and the object temperature of the target object, the impact of the heat difference in the sub-time period on the sub-heat outputted by the heating device and the sub-heat dissipated by the target object in the next sub-time period are fully considered in the embodiments of the invention by calculating the heat difference between the sub-heat outputted by the heating device and the sub-heat dissipated by the target object in the sub-time period. Thus, the accuracy of calculating the time required for the variable-frequency heating device to heat the object to the set temperature is improved. In this way, the user experience is greatly enhanced.

It should be noted that the heating time calculation apparatus provided in the above embodiments is described merely by way of examples based on the division of the above functional modules when executing the heating time calculation method. In actual applications, the above functions can be assigned to different functional modules as needed, that is, the internal structure of the apparatus can be divided into different functional modules to complete all or part of the functions described above. In addition, the heating time calculation apparatus provided in the above embodiment share the same inventive concept as the embodiments of the heating time calculation method belong to the same concept, and its implementation process can refer to details in the method embodiments, which is not repeated herein.

The above sequence numbers of the embodiments of the invention are for description only, and do not represent superiority or inferiority of the embodiments.

Embodiments of the invention also provide a computer storage medium. The computer storage medium has a plurality of instructions stored thereon. The plurality of instructions are adapted to be loaded by a processor and perform the heating time calculation method of the embodiments shown in FIGS. 1 to 8 above. The specific execution process can be found in the specific description of the embodiments shown in FIGS. 1 to 8, and details thereof are omitted herein.

The invention also provides a computer program product. The computer program product has at least one instruction stored thereon. The at least one instruction is adapted to be loaded by a processor and perform the heating time calculation method of the embodiments shown in FIGS. 1 to 8 above. The specific execution process can be found in the specific description of the embodiments shown in FIGS. 1 to 8, and details thereof are omitted herein.

Referring to FIG. 10, it is a schematic structural diagram of an electronic device according to an embodiment of the invention. As shown in FIG. 10, the electronic device 1000 may include at least one processor 1001, at least one network interface 1004, a user interface 1003, a memory 1005, and at least one communication bus 1002.

The communication bus 1002 is used to realize connection communication between these components.

The user interface 1003 may include a display and a camera. Optionally, the user interface 1003 may further include a standard wired interface and a wireless interface.

The network interface 1004 may optionally include a standard wired interface or a wireless interface (such as a WI-FI interface).

The processor 1001 may include one or more processing cores. The processor 1001 is connected to various parts within the entire server 1000 using various interfaces and buses, and is configured to execute various functions of the server 1000 and process data by running or executing instructions, a program, a code set, or an instruction set stored in memory 1005 and invoking data stored in memory 1005. Optionally, the processor 1001 may be implemented in at least one hardware form of digital signal processing (DSP), field-programmable gate array (FPGA), or programmable logic array (PLA). The processor 1001 may integrate one or a combination of a central processing unit (CPU), a graphics processing unit (GPU), a modem, etc. The CPU is mainly configured to process an operating system, a user interface, applications, etc. The GPU is configured to render and draw a content that needs to be displayed on the display. The modem is configured to handle wireless communication. It can be understood that the above modem may not be integrated into the processor 1001, but may be implemented by a separate chip.

The memory 1005 may include a random access memory (RAM) or a read-only memory (ROM).

Optionally, the memory 1005 includes a non-transitory computer-readable storage medium. The memory 1005 may be configured to store instructions, a program, a code, a code set, or an instruction set. The memory 1005 may include a program storage area and a data storage area. The program storage area may store instructions for implementing an operating system, instructions for at least one function (such as a touch function, a sound playback function, and an image playback function), instructions for implementing the above method embodiments, etc. The data storage area may store data involved in the above method embodiments, etc. The memory 1005 may optionally also be at least one storage device located away from the aforementioned processor 1001. As shown in FIG. 10, the memory 1005 as a computer storage medium may include an operating system, a network communication module, a user interface module, and a heating time calculation application.

In the electronic device 1000 shown in FIG. 10, the user interface 1003 is mainly configured to provide an input interface for the user and obtain data inputted by the user. The processor 1001 can be configured to invoke the heating time calculation application stored in the memory 1005 and specifically perform the following operations of:

obtaining an ambient temperature corresponding to each of a plurality of sub-time periods within a predetermined time period; determining, based on the ambient temperature corresponding to each of the plurality of sub-time periods, a heat difference between sub-heat outputted by a heating device and sub-heat dissipated by a target object corresponding to each of the plurality of sub-time periods; and obtaining, based on the heat difference corresponding to each of the plurality of sub-time periods, the number of the sub-time periods having corresponding heat differences that sum up to total heat, in which the total heat is heat required to heat the target object from an initial temperature to a set temperature.

In one embodiment, the processor 1001 is configured to perform the determining, based on the ambient temperature corresponding to each of the plurality of sub-time periods, the heat difference between the sub-heat outputted by the heating device and the sub-heat dissipated by the target object corresponding to each of the plurality of sub-time periods, and specifically, to perform the operation of: determining, based on the ambient temperature and an object temperature of the target object corresponding to the sub-time period, the sub-heat outputted by the heating device and the sub-heat dissipated by the target object corresponding to the sub-time period, in which the object temperature of the target object is affected by sub-heat outputted by the heating device corresponding to a previous sub-time period adjacent to the sub-time period; and determining, based on the sub-heat outputted by the heating device and the sub-heat dissipated by the target object corresponding to each of the plurality of sub-time periods, the heat difference corresponding to each of the plurality of sub-time periods.

In one embodiment, the plurality sub-time periods include a starting sub-time period and at least one non-starting sub-time period. The processor 1001 is configured to perform the determining, based on the ambient temperature and the object temperature of the target object corresponding to the sub-time period, the sub-heat outputted by the heating device and the sub-heat dissipated by the target object corresponding to the sub-time period includes, when the sub-time period is the non-starting sub-time period, and specifically, to perform the operation of: determining, based on a heat difference and an object temperature of the target object corresponding to a previous sub-time period adjacent to the non-starting sub-time period, an object temperature of the target object corresponding to the non-starting sub-time period; and determining, based on the object temperature of the target object and an ambient temperature corresponding to the non-starting sub-time period, the sub-heat outputted by the heating device and the sub-heat dissipated by the target object corresponding to the non-starting sub-time period.

In one embodiment, the processor 1001 is configured to perform the determining, based on the ambient temperature and the object temperature of the target object corresponding to the sub-time period, the sub-heat outputted by the heating device and the sub-heat dissipated by the target object corresponding to the sub-time period includes, when the sub-time period is the starting sub-time period, and specifically, to perform the operation of: determining, based on an ambient temperature and an object temperature of the target object corresponding to the starting sub-time period, the sub-heat outputted by the heating device and the sub-heat dissipated by the target object corresponding to the starting sub-time period.

In one embodiment, the processor 1001 is configured to perform the determining, based on the ambient temperature and an object temperature of the target object corresponding to the sub-time period, sub-heat outputted by the heating device and sub-heat dissipated by the target object corresponding to the sub-time period, and specifically, to perform the operation of: determining, based on a difference between the ambient temperature and the object temperature of the target object corresponding to the sub-time period, sub-heat dissipated by the target object corresponding to the sub-time period; determining, based on the ambient temperature and the object temperature of the target object corresponding to the sub-time period, an operating parameter of the heating device corresponding to the sub-time period; and determining, based on the operating parameter of the heating device corresponding to the sub-time period, the sub-heat outputted by the heating device corresponding to the sub-time period.

In one embodiment, the operating parameter includes a first operating parameter affected by the object temperature of the target object and a second operating parameter affected by the ambient temperature.

In one embodiment, the heating device includes a condensation unit and a compression unit; the first operating parameter includes at least one of an inlet temperature of the condensation unit, an inlet pressure of the condensation unit, an outlet temperature of the condensation unit, or an outlet pressure of the condensation unit; and the second operating parameter includes at least one of a suction temperature of the compression unit or a suction pressure of the compression unit.

In one embodiment, the plurality sub-time periods include a starting sub-time period and at least one non-starting sub-time period; the processor 1001 is configured to perform the determining, based on the ambient temperature and the object temperature of the target object corresponding to the sub-time period, the operating parameter of the heating device corresponding to the sub-time period, and specifically, to perform the operation of: determining, based on an object temperature difference between an object temperature of the target object corresponding to the non-starting sub-time period and an object temperature of the target object corresponding to a previous sub-time period adjacent to the non-starting sub-time period and an ambient temperature difference between an ambient temperature corresponding to the non-starting sub-time period and an ambient temperature corresponding to the previous sub-time period adjacent to the non-starting sub-time period, the operating parameter of the heating device corresponding to the sub-time period.

In one embodiment, the plurality of sub-time periods include a starting sub-time period and at least one non-starting sub-time period that are ordered chronologically from most recent to least recent; and the processor 1001 is configured to perform the obtaining the ambient temperature corresponding to each of the plurality of sub-time periods within the predetermined time period, and specifically to perform the operation of: obtaining an ambient temperature change curve of the predetermined time period, collecting an actual ambient temperature corresponding to the starting sub-time period, and determining the actual ambient temperature as an ambient temperature corresponding to the starting sub-time period; and determining an ambient temperature corresponding to each of the at least one non-starting sub-time period within the predetermined time period by correcting the ambient temperature change curve based on the actual ambient temperature.

In one embodiment, the processor 1001 is configured to perform the determining the ambient temperature corresponding to each of the at least one non-starting sub-time period within the predetermined time period by correcting the ambient temperature change curve based on the actual ambient temperature, and specifically, to perform the operation of: obtaining, based on the ambient temperature change curve, a predicted ambient temperature corresponding to each of the plurality of sub-time periods within the predetermined time period, wherein a plurality of predicted ambient temperatures include a first predicted ambient temperature corresponding to the starting sub-time period and a predicted ambient temperature corresponding to each of the at least one non-starting sub-time period; obtaining a difference between the first predicted ambient temperature and the actual ambient temperature to serve as an ambient temperature correction value; and obtaining the ambient temperature corresponding to each of the at least one non-starting sub-time period by correcting the predicted ambient temperature corresponding to each of the at least one non-starting sub-time period based on the ambient temperature correction value.

In the embodiments of the invention, the heat difference between the sub-heat outputted by the heating device and the sub-heat dissipated by the target object in the sub-time period is determined based on the ambient temperature corresponding to each of the plurality of time periods, and the number of the sub-time periods having corresponding heat differences that sum up to the total heat is obtained by determining the heat required to heat the target object from the initial temperature to the set temperature. Therefore, the time required to heat the target object from the initial temperature to the set temperature is determined based on the number of required sub-time periods and the duration of the sub-time periods. That is, since the operating frequency of the variable-frequency heating device is not constant and changes under the influence of the ambient temperature and the object temperature of the target object, the impact of the heat difference in the sub-time period on the sub-heat outputted by the heating device and the sub-heat dissipated by the target object in the next sub-time period are fully considered in the embodiments of the invention by calculating the heat difference between the sub-heat outputted by the heating device and the sub-heat dissipated by the target object in the sub-time period. Thus, the accuracy of calculating the time required for the variable-frequency heating device to heat the object to the set temperature is improved. In this way, the user experience is greatly enhanced.

It would be understood by those skilled in the art that all or a part of the steps carried by the method in the above-described embodiments may be completed by relevant hardware instructed by a program. The program may be stored in a computer-readable storage medium. When the program is executed, one or a combination of the steps of the method in the above-described embodiments may be completed. The storage medium may be a magnetic disk, an optical disc, a read-only memory (ROM), a random access memory (RAM), etc.

The embodiments disclosed above are merely preferred embodiments of the invention and should not be construed as limiting the scope of the invention. Therefore, any equivalent modifications made in accordance with the claims of the invention still fall within the scope of the invention.

**Claims**

1. A heating time calculation method, comprising:

   obtaining an ambient temperature corresponding to each of a plurality of sub-time periods within a predetermined time period;
   determining, based on the ambient temperature corresponding to each of the plurality of sub-time periods, a heat difference between sub-heat outputted by a heating device and sub-heat dissipated by a target object corresponding to each of the plurality of sub-time periods; and
   obtaining, based on the heat difference corresponding to each of the plurality of sub-time periods, the number of sub-time periods required to allow heat differences to add up to total heat, the total heat being heat required to heat the target object from an initial temperature to a set temperature.

2. The method according to claim 1, wherein said determining, based on the ambient temperature corresponding to each of the plurality of sub-time periods, the heat difference between the sub-heat outputted by the heating device and the sub-heat dissipated by the target object corresponding to each of the plurality of sub-time periods comprises:

   determining, based on the ambient temperature and an object temperature of the target object corresponding to the sub-time period, the sub-heat outputted by the heating device and the sub-heat dissipated by the target object corresponding to the sub-time period, wherein the object temperature of the target object is affected by sub-heat outputted by the heating device corresponding to a previous sub-time period adjacent to the sub-time period; and
   determining, based on the sub-heat outputted by the heating device and the sub-heat dissipated by the target object corresponding to each of the plurality of sub-time periods, the heat difference corresponding to each of the plurality of sub-time periods.

3. The method according to claim 2, wherein:

   the plurality of sub-time periods comprise a starting sub-time period and at least one non-starting sub-time period; and
   when the sub-time period is the non-starting sub-time period, said determining, based on the ambient temperature and the object temperature of the target object corresponding to the sub-time period, the sub-heat outputted by the heating device and the sub-heat dissipated by the target object corresponding to the sub-time period comprises:

      determining, based on the heat difference and the object temperature of the target object corresponding to a previous sub-time period adjacent to the non-starting sub-time period, an object temperature of the target object corresponding to the non-starting sub-time period; and
      determining, based on the object temperature of the target object and the ambient temperature corresponding to the non-starting sub-time period, the sub-heat outputted by the heating device and the sub-heat dissipated by the target object corresponding to the non-starting sub-time period.

4. The method according to claim 3, wherein when the sub-time period is the starting sub-time period, said determining, based on the ambient temperature and the object temperature of the target object corresponding to the sub-time period, the sub-heat outputted by the heating device and the sub-heat dissipated by the target object corresponding to the sub-time period comprises:
   determining, based on the ambient temperature and the object temperature of the target object corresponding to the starting sub-time period, the sub-heat outputted by the heating device and the sub-heat dissipated by the target object corresponding to the starting sub-time period.

5. The method according to any one of claims 2 to 4, wherein said determining, based on the ambient temperature and the object temperature of the target object corresponding to the sub-time period, the sub-heat outputted by the heating device and the sub-heat dissipated by the target object corresponding to the sub-time period comprises:

   determining, based on a difference between the ambient temperature and the object temperature of the target object corresponding to the sub-time period, the sub-heat dissipated by the target object corresponding to the sub-time period;
   determining, based on the ambient temperature and the object temperature of the target object corresponding to the sub-time period, an operating parameter of the heating device corresponding to the sub-time period; and

determining, based on the operating parameter of the heating device corresponding to the sub-time period, the sub-heat outputted by the heating device corresponding to the sub-time period.

6. The method according to claim 5, wherein the operating parameter comprises a first operating parameter affected by the object temperature of the target object and a second operating parameter affected by the ambient temperature.

7. The method according to claim 6, wherein:

the heating device comprises a condensation unit and a compression unit;
the first operating parameter comprises at least one of an inlet temperature of the condensation unit, an inlet pressure of the condensation unit, an outlet temperature of the condensation unit, or an outlet pressure of the condensation unit; and
the second operating parameter comprises at least one of a suction temperature of the compression unit or a suction pressure of the compression unit.

8. The method according to any one of claims 5 to 7, wherein:

the plurality of sub-time periods comprise a starting sub-time period and at least one non-starting sub-time period; and
said determining, based on the ambient temperature and the object temperature of the target object corresponding to the sub-time period, the operating parameter of the heating device corresponding to the sub-time period comprises:
determining the operating parameter of the heating device corresponding to the sub-time period, based on an object temperature difference between the object temperature of the target object corresponding to the non-starting sub-time period and the object temperature of the target object corresponding to a previous sub-time period adjacent to the non-starting sub-time period and an ambient temperature difference between the ambient temperature corresponding to the non-starting sub-time period and the ambient temperature corresponding to the previous sub-time period adjacent to the non-starting sub-time period.

9. The method according to any one of claims 1 to 8, wherein:

the plurality of sub-time periods comprise, in time order, a starting sub-time period and at least one non-starting sub-time period; and
said obtaining the ambient temperature corresponding to each of the plurality of sub-time periods within the predetermined time period comprises:

obtaining an ambient temperature change curve of the predetermined time period, collecting an actual ambient temperature corresponding to the starting sub-time period, and determining the actual ambient temperature as the ambient temperature corresponding to the starting sub-time period; and
determining an ambient temperature corresponding to each of the at least one non-starting sub-time period within the predetermined time period by correcting the ambient temperature change curve based on the actual ambient temperature.

10. The method according to claim 9, wherein said determining the ambient temperature corresponding to each of the at least one non-starting sub-time period within the predetermined time period by correcting the ambient temperature change curve based on the actual ambient temperature comprises:

obtaining, based on the ambient temperature change curve, predicted ambient temperatures corresponding to respective ones of the plurality of sub-time periods within the predetermined time period, wherein the predicted ambient temperatures comprise a first predicted ambient temperature corresponding to the starting sub-time period and a predicted ambient temperature corresponding to each of the at least one non-starting sub-time period;
obtaining a difference between the first predicted ambient temperature and the actual ambient temperature to serve as an ambient temperature correction value; and
obtaining the ambient temperature corresponding to each of the at least one non-starting sub-time period by correcting the predicted ambient temperature corresponding to each of the at least one non-starting sub-time period based on the ambient temperature correction value.

**11.** A heating time calculation apparatus, comprising:

an ambient temperature module configured to obtain an ambient temperature corresponding to each of a plurality of sub-time periods within a predetermined time period;

a heat difference module configured to determine, based on the ambient temperature corresponding to each of the plurality of sub-time periods, a heat difference between sub-heat outputted by a heating device and sub-heat dissipated by a target object corresponding to each of the plurality of sub-time period; and

a time determination module configured to obtain, based on the heat difference corresponding to each of the plurality of sub-time periods, the number of sub-time periods required to allow heat differences to add up to total heat, the total heat being heat required to heat the target object from an initial temperature to a set temperature.

**12.** A computer storage medium, having a plurality of instructions stored thereon, wherein the plurality of instructions are adapted to be loaded by a processor and perform steps of the method according to any one of claims 1 to 10.

**13.** An electronic device, comprising:

a processor; and

a memory having a computer program stored thereon, wherein the computer program is adapted to be loaded by the processor and perform steps of the method according to any one of claims 1 to 10.

Target object 103

Ambient temperature $T_3$
sensor 1027

Condensation unit outlet
temperature $T_{co}$ sensor 1021

Condensation unit inlet
temperature $T_{ci}$ sensor 1023

Condensation unit outlet
pressure $P_{co}$ sensor 1022

Condensation unit inlet
pressure $P_{ci}$ sensor 1024

Heating device 101

Condensation
unit 1011

Object temperature $T_l$ sensor
1028 of target object

Compression
unit 1012

Compression unit suction
temperature $T_s$ sensor 1025
Compression unit suction pressure
$P_s$ sensor 1026

FIG. 1

S101

Obtaining an ambient temperature corresponding to each of a plurality of sub-time periods within a predetermined time period

S102

Determining, based on the ambient temperature corresponding to each of the plurality of sub-time periods, a heat difference between sub-heat outputted by a heating device and sub-heat dissipated by a target object corresponding to each of the plurality of sub-time periods

S103

Obtaining, based on the heat difference corresponding to each of the plurality of sub-time periods, the number of the sub-time periods having corresponding heat differences that sum up to total heat, in which the total heat is heat required to heat the target object from an initial temperature to a set temperature

FIG. 2

Ambient temperature $T_3$

$Q_1+Q_2+Q_3+\cdots\cdots+Q_{n-1}<Q\leqslant Q_1+Q_2+Q_3+\cdots\cdots+Q_{n-1}+Q_n$

$T_{31}$  $T_{32}$  $T_{33}$  $T_{3n}$

Ambient temperature change curve L

$H_1$  $H_2$  $H_3$  $H_n$

0

Time

$Q_1=t_1\times(P_{11}-P_{21})$

$Q_2=t_2\times(P_{12}-P_{22})$

$Q_3=t_3\times(P_{13}-P_{23})$

......

$Q_n=t_n\times(P_{1n}-P_{2n})$

FIG. 3

Obtaining an ambient temperature change curve of the predetermined time period, collecting an actual ambient temperature corresponding to the starting sub-time period, and determining the actual ambient temperature as an ambient temperature corresponding to the starting sub-time period    S201

Determining an ambient temperature corresponding to each of the at least one non-starting sub-time period within the predetermined time period by correcting the ambient temperature change curve based on the actual ambient temperature    S202

Determining, based on the ambient temperature and an object temperature of the target object corresponding to the sub-time period, the sub-heat outputted by the heating device and the sub-heat dissipated by the target object corresponding to the sub-time period    S203

Determining, based on the sub-heat outputted by the heating device and the sub-heat dissipated by the target object corresponding to each of the plurality of sub-time periods, the heat difference corresponding to each of the plurality of sub-time periods    S204

Obtaining, based on the heat difference corresponding to each of the plurality of sub-time periods, the number of the sub-time periods having corresponding heat differences that sum up to total heat, in which the total heat is heat required to heat the target object from an initial temperature to a set temperature    S205

FIG. 4

Predicted ambient
temperature $T_4$

$T_{41}$   $T_{42}$   $T_{43}$                     $T_{4n}$

Ambient
temperature
change curve L

$H_1$   $H_2$   $H_3$   ......   $H_n$

0                                               Time

Ambient
temperature
$T_3$

$T_{41}$   $T_{42}$   $T_{43}$                     $T_{4n}$

Actual ambient
temperature $T_{31}$ collected

$T_{31}$   $T_{32}=T_{42}+T_0$   $T_{33}=T_{43}+T_0$   ......   $T_{3n}=T_{4n}+T_0$

ambient temperature
correction value

$T_0=T_{41}-T_{31}$

$H_1$   $H_2$   $H_3$                     $H_n$

Time

FIG. 5

Starting sub-time period $H_1$

Object temperature $T_{11}$

Ambient temperature $T_{31}$

Collect

Collect

**First operating parameter**
Inlet temperature $T_{ci1}$ of condensation unit
Inlet pressure $P_{ci1}$ of condensation unit
Outlet temperature $T_{co1}$ of condensation unit
Outlet pressure $P_{co1}$ of condensation unit

**Second operating parameter**
Suction temperature $T_{s1}$ of compression unit
Suction pressure $P_{s1}$ of compression unit

Output power $P_{11}$ of heating device

Non-starting sub-time period $H_2$

Object temperature $T_{12}$

Ambient temperature $T_{32}$

object temperature difference $T_{12}$-$T_{11}$

Ambient temperature difference $T_{32}$-$T_{31}$

**First operating parameter**
Inlet temperature of condensation unit:
$T_{ci2}=T_{ci1}+(T_{12}-T_{11})$
Inlet pressure $P_{ci2}$ of condensation unit
Outlet temperature of condensation unit:
$T_{co2}+(T_{12}-T_{11})$
Outlet pressure $P_{co2}$ of condensation unit

**Second operating parameter**
Suction temperature of compression unit:
$T_{s1}=T_{ci1}+(T_{32}-T_{31})$
Suction pressure $P_{s1}$ of compression unit

Output power $P_{12}$ of heating device

FIG. 6

Obtaining an ambient temperature change curve of the predetermined time period, collecting an actual ambient temperature corresponding to the starting sub-time period, and determining the actual ambient temperature as an ambient temperature corresponding to the starting sub-time period — S301

Obtaining, based on the ambient temperature change curve, a predicted ambient temperature corresponding to each of the plurality of sub-time periods within the predetermined time period — S302

Obtaining a difference between the first predicted ambient temperature and the actual ambient temperature to serve as an ambient temperature correction value — S303

Obtaining the ambient temperature corresponding to each of the at least one non-starting sub-time period by correcting the predicted ambient temperature corresponding to each of the at least one non-starting sub-time period based on the ambient temperature correction value — S304

Determining, based on the ambient temperature and the object temperature of the target object corresponding to the starting sub-time period, an operating parameter of the heating device corresponding to the starting sub-time period — S305

Determining, based on the operating parameter of the heating device corresponding to the starting sub-time period, the sub-heat outputted by the heating device corresponding to the starting sub-time period — S306

Determining, based on a difference between the ambient temperature and the object temperature of the target object corresponding to the starting sub-time period, sub-heat dissipated by the target object corresponding to the starting sub-time period — S307

TO BE CONTINUED

FIG. 7

TO BE CONTINUED

determining, based on the sub-heat outputted by the heating device and the sub-heat dissipated by the target object corresponding to the starting sub-time period, the heat difference corresponding to the starting sub-time period — S308

Determining, based on a heat difference and an object temperature of the target object corresponding to a previous sub-time period adjacent to the non-starting sub-time period, an object temperature of the target object corresponding to the non-starting sub-time period — S309

Determining, based on an object temperature difference between an object temperature of the target object corresponding to the non-starting sub-time period and an object temperature of the target object corresponding to a previous sub-time period adjacent to the non-starting sub-time period and an ambient temperature difference between an ambient temperature corresponding to the non-starting sub-time period and an ambient temperature corresponding to the previous sub-time period adjacent to the non-starting sub-time period, the operating parameter of the heating device corresponding to the sub-time period — S310

Determining, based on the operating parameter of the heating device corresponding to the non-starting sub-time period, the sub-heat outputted by the heating device corresponding to the non-starting sub-time period — S311

Determining, based on a difference between the ambient temperature and the object temperature of the target object corresponding to the non-starting sub-time period, sub-heat dissipated by the target object corresponding to the non-starting sub-time period — S312

Determining, based on the sub-heat outputted by the heating device and the sub-heat dissipated by the target object corresponding to the non-starting sub-time period, the heat difference corresponding to the non-starting sub-time period — S313

Obtaining, based on the heat difference corresponding to each of the plurality of sub-time periods, the number of the sub-time periods having corresponding heat differences that sum up to total heat, the total heat being heat required to heat the target object from an initial temperature to a set temperature — S314

FIG. 7

Collect
Ambient
temperature $T_{11}$

Collect
Operating parameter
$X_1$

Output power $P_{11}$ of heating device

Starting sub-time period $H_1$

Collect
Ambient
temperature $T_{31}$

Heat dissipation power $P_{21}$ of target object

Heat difference $Q_1$

$T_{11}+Q_1$

Object
temperature $T_{12}$

Operating parameter
$X_2$

Output power $P_{12}$ of heating device

Non-starting sub-time period $H_2$

Determine

Ambient
temperature $T_{32}$

Heat dissipation power $P_{22}$ of target object

Heat difference $Q_2$

......

$T_{1n-1}+Q_{n-1}$

Object
temperature $T_{1n}$

Operating parameter
$X_n$

Output power $P_{1n}$ of heating device

Non-starting sub-time period $H_n$

determine

Ambient
temperature $T_{3n}$

Heat dissipation power $P_{2n}$ of target object

Heat difference $Q_n$

FIG. 8

```
┌─────────────────────────┐
│        Ambient          │ ⌐901
│   temperature module    │
└─────────────────────────┘
             │
┌─────────────────────────┐
│    Heat difference      │ ⌐902
│        module           │
└─────────────────────────┘
             │
┌─────────────────────────┐
│   Time determination    │ ⌐903
│        module           │
└─────────────────────────┘
```

FIG. 9

⌐ 1000

```
┌──────────────────────────────────────────────────────────────────┐
│                        ⌐1001              ⌐1005                    │
│                   ┌───────────┐      ┌──────────────────────┐      │
│                   │ Processor │      │  Operating system    │      │
│                   └───────────┘      ├──────────────────────┤      │
│          ⌐1002          │            │     Network          │      │
│     ◄════════════════════════════════╡  communication       │      │
│                         │            │     module           │      │
│                         │            ├──────────────────────┤      │
│                         │            │  User interface      │      │
│           ⌐1003         │   ⌐1004    │     module           │      │
│     ┌──────────────┐    │  ┌────────┐├──────────────────────┤      │
│     │User interface│    │  │Network ││  Heating time        │      │
│     ├──────────────┤       │interface││ calculation          │      │
│     │   Display    │       └────────┘│ application          │      │
│     ├──────────────┤                 ├──────────────────────┤      │
│     │   Camera     │                 │      Memory          │      │
│     └──────────────┘                 └──────────────────────┘      │
│                                                                    │
│                                          Electronic device         │
└──────────────────────────────────────────────────────────────────┘
```

FIG. 10

## INTERNATIONAL SEARCH REPORT

| International application No. |
| --- |
| **PCT/CN2024/071153** |

**A. CLASSIFICATION OF SUBJECT MATTER**

F24H 1/54(2022.01)i; F24H 15/212(2022.01)i; F24H 15/269(2022.01)i; F24H 15/37(2022.01)i; F24H 15/414(2022.01)i; G06F 17/18(2006.01)i

According to International Patent Classification (IPC) or to both national classification and IPC

**B. FIELDS SEARCHED**

Minimum documentation searched (classification system followed by classification symbols)

IPC: F24H G06F G05D B60L F24D

Documentation searched other than minimum documentation to the extent that such documents are included in the fields searched

Electronic data base consulted during the international search (name of data base and, where practicable, search terms used)

CNABS: CNTXT; VEN; CNKI; USTXT; EPTXT; WOTXT: 加热, 时间, 时长, 预设, 预测, 环境温度, 室内温度, 热量, 散热, 损失, 设定温度, 预设温度, 设置温度, heat+, tim+, environment, indoor, temperature, heat lost, heat loss, heat sinking, heat dissipation, preset, predict

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116717910 A (GUANGDONG MIDEA HEATING & VENTILATION EQUIPMENT CO., LTD. et al.) 08 September 2023 (2023-09-08) <br> claims 1-13 | 1-13 |
| A | CN 113867435 A (BSH ELECTRICAL APPLIANCES (JIANGSU) CO., LTD. et al.) 31 December 2021 (2021-12-31) <br> description, paragraphs 35-166, and figures 1-4 | 1-13 |
| A | CN 111829176 A (GUANGDONG JIWEI TECHNOLOGY CO., LTD.) 27 October 2020 (2020-10-27) <br> description, paragraphs 16-26, and figure 1 | 1-13 |
| A | CN 113879180 A (HOZON NEW ENERGY AUTOMOBILE CO., LTD.) 04 January 2022 (2022-01-04) <br> description, paragraphs 36-117, and figures 1-6 | 1-13 |
| A | EP 2369244 A1 (REHAU AG & COMPANY) 28 September 2011 (2011-09-28) <br> description, paragraphs 33-78, and figures 1-4 | 1-13 |

☐ Further documents are listed in the continuation of Box C.  ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **05 March 2024** | **15 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071153**

| Patent document cited in search report | | | Publication date (day/month/year) | Patent family member(s) | | | Publication date (day/month/year) |
|---|---|---|---|---|---|---|---|
| CN | 116717910 | A | 08 September 2023 | None | | | |
| CN | 113867435 | A | 31 December 2021 | None | | | |
| CN | 111829176 | A | 27 October 2020 | CN | 111829176 | B | 23 November 2021 |
| CN | 113879180 | A | 04 January 2022 | None | | | |
| EP | 2369244 | A1 | 28 September 2011 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310662858